Europäisches Patentamt

European Patent Office

Office européen des brevets

(11) Veröffentlichungsnummer: **0 294 777**

**A2**

(12) # EUROPÄISCHE PATENTANMELDUNG

(21) Anmeldenummer: 88109101.1

(51) Int. Cl.⁴: **C09H 3/00 , A23J 1/10**

(22) Anmeldetag: 08.06.88

(30) Priorität: 09.06.87 DE 3719132
09.06.87 DE 3719131
26.06.87 DE 3721088
02.09.87 DE 3729283

(43) Veröffentlichungstag der Anmeldung:
**14.12.88 Patentblatt 88/50**

(84) Benannte Vertragsstaaten:
**AT BE CH DE ES FR IT LI NL**

(71) Anmelder: **Rieger, Herbert**
**Talstrasse 33**
**D-7121 Ingersheim(DE)**

(72) Erfinder: **Rieger, Herbert**
**Talstrasse 33**
**D-7121 Ingersheim(DE)**

(74) Vertreter: **Witte, Alexander, Dr.-Ing.**
**Schickhardtstrasse 24**
**D-7000 Stuttgart 1(DE)**

(54) **Tank zum Herstellen von Gelatine.**

(57) Ein Tank (10) dient zum Herstellen von Gelatine. Er weist einen liegend-zylindrischen Abschnitt (11) mit einem horizontalachsigen Rührwerk (15, 40) auf. Im Tank (10) ist mindestens ein Sieb (44) angeordnet, das einen Hohlraum (58) von übrigen Innenraum (59) des Tanks (10) trennt, in dem das Rührwerk (15, 40) angeordnet ist. Vom Hohlraum (58) zum Außenraum führt mindestens ein Stutzen(24).

Um eine optimale Entleerung des Tanks (10) insbesondere bei großen Tanks mit fünfzig und mehr Kubikmetern Inhalt zu gewährleisten ist im Tankboden (43) eine zur Achse des Tanks (10) parallele Förderschnecke (41) angeordnet. Das Sieb (44) ist zum Tankboden (43) hin nach Art einer Rinne ausgebildet und die Förderschnecke (41) ist in der Rinne angeordnet

Fig. 3

## Tank zum Herstellen von Gelatine

Die Erfindung betrifft einen Tank zum Herstellen von Gelatine.

Die Erfindung betrifft ferner einen Tank zum Herstellen von Gelatine, der einen liegend-zylindrischen oder -konischen Abschnitt mit einem horizontalachsigen Rührwerk aufweist, wobei im Tank mindestens ein Sieb angeordnet ist, das einen Hohlraum vom übrigen Innenraum des Tank trennt, in dem das Rührwerk angeordnet ist, und wobei ferner mindestens ein von dem Hohlraum zum Außenraum führender Stutzen vorgesehen ist.

Die Erfindung betrifft weiterhin einen Tank zum Herstellen von Gelatine, der einen liegend-zylindrischen oder -konischen Abschnitt mit einem horizontalachsigen Rührwerk aufweist, wobei im Tank mindestens ein Sieb angeordnet ist, das sich im Abstand oberhalb eines Bodens des Tanks erstreckt und das einen Hohlraum vom übrigen Tankinneren trennt, in dem das Rührwerk angeordnet ist, und wobei ferner mindestens ein von dem Hohlraum zum Außenraum führender Stutzen vorgesehen ist.

Die Erfindung betrifft schließlich einen Tank zum Herstellen von Gelatine, der einen liegend-zylindrischen oder -konischen Abschnitt mit einem horizontalachsigen Rührwerk aufweist, wobei im Tank mindestens ein Stirnseitensieb angeordnet ist, das sich im Abstand neben einem stirnseitigen Boden des Tanks erstreckt und einen Hohlraum vom übrigen Innenraum des Tanks trennt, in dem das Rührwerk angeordnet ist, und wobei ferner mindestens ein von dem Hohlraum zum Außenraum führender Stutzen vorgesehen ist.

Der erfindungsgemäße Tank kann neben dem eingangs genannten Anwendungsfall der Herstellung von Gelatine darüberhinaus noch für eine Vielzahl weiterer Anwendungen eingesetzt werden, bei denen es darum geht, aus Nahrungsmittelgemischen von festen und flüssigen Bestandteilen Auszüge herzustellen. Dies ist beispielsweise der Fall bei der Herstellung von Auszügen aus Gemüsen, Obst, Kräuterpflanzen, Tees und dgl., die Erfindung ist jedoch nicht auf den Anwendungsbereich bei pflanzlichen Ausgangsmaterialien beschränkt, sondern auch dafür geeignet und auch vorgesehen, Auszüge aus tierischen Ausgangsmaterialien herzustellen.

Im nachfolgenden soll die Erfindung, ohne sie auf dieses Anwendungsgebiet zu beschränken, anhand des Anwendungsfalles der Herstellung von Gelatine beschrieben werden.

Gelatine gehört, chemisch gesehen, zur Gruppe der tierischen Leime, der sogenannten Glutinleime, die aus tierischen Ausgangsmaterialien, insbesondere Schwarten, Häuten, Köpfen, Gliedmaßen, Knochen, Ledern usw. hergestellt werden. Man verwendet hierzu Ausgangsmaterialien einer Vielzahl von Tieren, beispielsweise von Schweinen, Kälbern, Rindern, Hammeln und Fischen.

Glutinleime enthalten das aus den sogenannten Kollagenen, den leimgebenden Stoffen der Gerüstsubstanz der tierischen Ausgangsmaterialien durch verschiedene chemische und physikalische Behandlungsverfahren gewonnene Glutin, ein hochmolekulares Eiweißprodukt. Gelatine stellt eine fast reine, unabgebaute Glutinlösung dar. Sie bildet hochviskose Lösungen mit hochliegenden Erstarrungspunkten und besitzt eine große Klebefähigkeit.

Bei der Herstellung von Gelatine ist man seither so vorgegangen, daß man - ggf. nach chemischer Vorbehandlung, beispielsweise einer Entmineralisierung von Knochen durch milden alkalischen Abbau - die Ausgangsmaterialien durch Verkochen ausgeschmolzen hat.

Bei einem in der DE - A1 - 36 10 025 beschriebenen Tank werden die tierischen Ausgangsprodukte von oben in den geschlossenen, liegenden und kreiszylindrischen Tank eingefüllt. Zunächst wird mittels eines geeigneten Zulaufs Kaltwasser in den Tank eingelassen. Das Gemisch aus Ausgangsprodukten und Kaltwasser wird alsdann mittels des im Tank angeordneten motorischen Rührwerks durchgerührt. Das kalte Wasser wird dann durch das Sieb hindurch in einen stromabwärts des Siebes angeordneten Stutzen abgelassen und es werden dann die genannten Schritte wiederholt, und zwar zunächst mit einem Behandlungsbad, vorzugsweise angesäuertem Wasser oder Kalkmilch, und es schließen sich dann erneut weitere Wasch- bzw. Spülbäder an. Schließlich wird in den bekannten Tank Heißwasser eingelassen und es werden die tierischen Ausgangsmaterialien nochmals gründlich durchgerührt, wobei die Temperatur des Gemenges aus Heißwasser und den tierischen Ausgangsmaterialien so gewählt ist, daß sich das Glutin aus dem Ausgangsmaterial löst.

Infolge des spezifischen Gewichtes sinkt das üblicherweise als "Produkt" bezeichnete Glutin nach unten ab, während sich das Wasser und auch das gleichfalls aus dem tierischen Ausgangsmaterial herausgelöste Fett oberhalb des Glutins ansammeln. Das Glutin durchströmt nun das Sieb und kann aus dem unterhalb des Siebes angeordneten Hohlraum mittels weiterer geeigneter Stutzen abgezogen werden. Dieser letztgenannte Schritt kann nun mit jeweils ansteigender Prozeßtemperatur wiederholt werden, um bei immer höheren Temperaturen weiteres Glutin (bei steigender Temperatur jedoch mit abnehmender Qualität) herauszulösen.

Bei dem erwähnten Tank ist schließlich vorgesehen, die ausgewaschenen Reste des Ausgangsmaterials durch einen zentralen, groß dimensionierten Stutzen unter Schwerkraft abzulassen. Hierzu ist der Boden des Siebes als durchgehende Wanne ausgebildet, an deren tiefstem Punkt sich ein Ablaßstutzen großen Durchmessers befindet, der den Hohlraum durchsetzt und zum Außenraum führt.

In der DE - A1 - 36 08 282 ist ferner angegeben, daß in einem liegend-zylindrischen Tank zum Herstellen von Gelatine eine Förderschnecke vorgesehen sein kann. Ein Abzug der ausgeschmolzenen Gelatine durch Siebe ist dort jedoch nicht vorgesehen.

Der Erfindung liegt die Aufgabe zugrunde, die Nachteile des Standes der Technik zu vermeiden.

Insbesondere soll ermöglicht werden, die im Tank verbliebenen ausgelaugten Reste nahezu vollständig ohne Spülvorgänge aus dem Tank herauszufördern.

Gemäß dem eingangs zunächst genannten Tank wird diese Aufgabe erfindungsgemäß dadurch gelöst, daß er ein Rührwerk enthält.

Gemäß dem eingangs als zweites genannten Tank wird diese Aufgabe erfindungsgemäß dadurch gelöst, daß im Tankboden eine zur Achse des Tanks parallele Förderschnecke angeordnet ist, daß das Sieb zum Tankboden hin nach Art einer Rinne ausgebildet ist und daß die Förderschnecke in der Rinne angeordnet ist.

Die der Erfindung zugrundeliegende Aufgabe wird auf diese Weise vollkommen gelöst, weil die Neigung des Siebes im Bereich der Rinne genügend steil gewählt werden kann, so daß alle ausgelaugten Reste der Ausgangsprodukte nach unten in die Rinne sinken. Die dort vorgesehene Förderschnecke fördert die ausgelaugten Reste dann ohne Schwierigkeiten in den Außenraum, wo sie mit geeigneten Behältern oder sonstigen Transportmitteln abgefahren werden können.

Gemäß dem eingangs genannten als drittes genannten Tank wird die Aufgabe erfindungsgemäß dadurch gelöst, daß unten an einem stirnseitigen Boden des Tanks ein Ausräumstutzen großen Durchmessers angeordnet ist, wobei die Oberkante der Öffnung des Stutzens im Abstand oberhalb des Siebes angeordnet ist.

Schließlich wird die der Erfindung zugrundeliegende Aufgabe durch den eingangs als viertes genannten Tank dadurch gelöst, daß unten an einem stirnseitigen Boden des Tanks ein Ausräumstutzen großen Durchmessers angeordnet ist, wobei die Oberkante der Öffnung des Stutzens im Abstand oberhalb des unteren Tankbodens angeordnet ist.

Die der Erfindung zugrundeliegende Aufgabe wird auch auf die beiden vorstehend genannten Weisen vollkommen gelöst, weil es nun möglich ist, den Tank nach Öffnen des Ausräumstutzens von der Seite her zu entleeren. Aufgrund der Tatsache, daß die Reste des Ausgangsprodukts sehr rutschig sind, wird sich ein Großteil der verbleibenden ausgelaugten Reste des Ausgangsproduktes von selbst aus dem Tank entleeren. Zum Ausräumen des Restes kann nun jedoch aufgrund der geschilderten Konfiguration des Ausräumstutzens von Hand ein Ausräumgerät horizontal in den Tank eingeführt werden, beispielsweise eine lange Stange mit einem am freien Ende der Stange befestigten Querblech, um die noch verbleibenden Reste aus dem Tank von Hand zu entfernen.

Alle vorstehend erläuterten Lösungen der erfindungsgemäßen Aufgabe bringen auch unter Umweltgesichtspunkten einen weiteren Vorteil mit sich.

Bei bekannten Tanks unterschiedlicher Anwendungen, die sich bei großen Abmessungen nur unvollkommen selbst entleeren, muß nämlich mit einer großen Menge Wasser das Tankinnere ausgespritzt werden, um die Materialreste herauszuspülen, die in den Ecken und an den weniger steilen Abschnitten des Tankinneren liegen geblieben sind.

Das auf diese Weise aus dem Tank austretende Spülwasser mit Materialresten gelangt in die Kanalisation und führt dort zu einer Belastung der Kläranlagen.

Bei dem erfindungsgemäßen Tank kann hingegen mittels der Schnecke oder mittels des Ausräumstutzens und des Ausräumgerätes eine nahezu vollkommene Entleerung des Tanks vorgenommen werden. Die Materialreste können, wie bereits erwähnt, in separate Behälter ohne Spülwasseranteil gebracht und dann einer Weiterverarbeitung zugeführt werden. Eine solche Weiterverarbeitung sieht z.B. die Herstellung von Futtermitteln vor. Die Rest werden dabei verdampft, so daß ein möglichst geringer Wasseranteil in den angelieferten Resten erwünscht ist.

Bei Ausführungsbeispielen der Erfindung ist die die Förderschnecke aufnehmende Rinne des Siebes bis etwa zur halben Höhe der Förderschnecke ungelocht oder nur mit wenigen Ablauföffnungen ausgebildet.

Diese Maßnahme hat den Vorteil, daß ein Passiereffekt vermieden wird, weil bei ungelochten oder bei mit nur wenigen Ablauföffnungen versehenem Boden der Rinne die Gänge der Schnecke kein Ausgangsmaterial durch Öffnungen des Rinnenbodens quetschen können.

Bei weiteren Ausführungsbeispielen der Erfindung sind im Abstand von stirnseitigen Böden den Querschnitt des Tanks mindestens teilweise überdeckende Stirnseitensiebe angeordnet.

Diese Maßnahme hat den Vorteil, daß in den Böden ein verhältnismäßig großer Vorratsraum entsteht, in dem sich beim Ausschmelzen der Gelatine die Gelatine ansammeln kann. In diesen Fällen kann es ausreichen, daß nur die Stirnseitensiebe und einzelne Abschnitte der Rinne als Lochbleche ausgebildet sind, wodurch sich Kostenvorteile ergeben.

Weiter ist eine Ausführungsform der Erfindung besonders bevorzugt, die sich dadurch auszeichnet, daß das Sieb konzentrisch zum zylindrischen oder konischen Abschnitt verläuft und im Bereich des Tankbodens im Abstand von einer Längsausbuchtung verläuft, daß das Rührwerk mit seiner Achse unterhalb einer Längsachse des Tanks angeordnet ist, daß an freien Enden von Rührwerksarmen des Rührwerks elastische Abstreifer angeordnet sind, daß das Sieb im unteren Bereich der Rinne unterhalb der Förderschnecke ungelocht, in einem daran angrenzenden ersten Bereich bis zum Übergang. zur konzentrischen Anordnung des Siebes gelocht, in einem daran angrenzenden zweiten Bereich, in dem die Abstreifer des Rührwerks bei Rotation entlangstreifen, wiederum ungelocht und - schließlich im daran angrenzenden dritten Bereich wiederum gelocht ausgebildet ist.

Diese Maßnahme hat den Vorteil, daß ein optimaler Kompromiß zwischen möglichst großen Siebflächen einerseits und dem Vermeiden einer Passierwirkung andererseits erreicht wird. Eine Passierwirkung kann nämlich - wie erwähnt - zum einen unterhalb der Förderschnecke in dem Bereich der Rinne entstehen, der die Förderschnecke unten umschlingt, während andererseits bei exzentrisch angeordnetem Rührwerk die entlangstreifenden elastischen Abstreifer ebenfalls Ausgangsmaterial durch Sieböffnungen hindurchpassieren könnten.

Bei der geschilderten Anordnung sind jedoch diese Bereiche ungelocht ausgebildet, während im übrigen das Sieb gelocht ausgebildet ist. Durch die ungelochte Ausbildung im zweiten Bereich wird zudem sichergestellt, daß der Tank durch Drehung des Rührwerks optimal von Materialresten geleert wird, weil dort die Abstreifer auf durchgehendem Blech, das an dieser Stelle relativ flach verläuft, abgesetzte Materialreste ohne jede Passierwirkung in den unteren Teil der Rinne fördern können.

Bei einer Gruppe von Ausführungsbeispielen weist das Rührwerk vorzugsweise plattenartige Rührwerksarme auf.

Diese Rührwerksarme, die beispielsweise radial abstehen und im Abstand voneinander über die Rührwerkswelle verteilt sein können, haben aufgrund ihrer plattenartigen Struktur den Vorteil, daß das Ausgangsmaterial einerseits gründlich, andererseits aber auch schonend durchgerührt wird. Dies hat den Vorteil, daß keine Fetzen von den Teilen des Ausgangsmaterials abgetrennt werden.

Derartige Fetzen könnten entweder das Sieb verstopfen oder durch die Öffnungen des Siebes hindurchgelangen und die Qualität der Gelatine mindern.

Bei Tanks mit Rührwerksarmen können zwei Gruppen radial abstehende Rührwerksarme vorgesehen sein, die um etwa 180° gegeneinander auf der Rührwerkswelle versetzt angeordnet sind.

Die Rührwerksarme der beiden Gruppen können auf Lücke angeordnet sein, um ein vollständiges Überstreichen des Innenraumes des Tanks zu gewährleisten. So können z.B. auf einer Seite der Rührwerkswelle vier Rührwerksarme und auf der um 180° versetzten Seite drei dieser Arme auf Lücke angeordnet sein. Beim Entleeren des Tanks können sich aber in diesem Falle Probleme einstellen, wenn die Rührwerksarme dazu benutzt werden sollen, um die Reste aus dem Tank herauszufördern, indem die Reste in die Rinne, in den Bereich der Förderschnecke, gebracht werden.

In diesem Falle kann es nämlich sein, daß beim Rotierenlassen des Rührwerkes die einzelnen Rührwerksarme Schneisen in die Reste rühren, die am Boden des Siebes in den flachen Bereichen liegen geblieben sind. Bei einer halben Umdrehung des Rührwerkes bleiben daher noch erhebliche Reste liegen, während bei einer vollen Drehung die auf Lücke stehenden Arme die liegengebliebenen Reste in die falsche Richtung fördern.

Ein weiteres Ausführungsbeispiel der Erfindung zeichnet sich daher dadurch aus, daß die freien Enden von mindestens näherungsweise miteinander fluchtenden Rührwerksarmen mittels eines durchgehenden Balkens miteinander verbunden sind, der einen durchgehenden Abstreifer trägt. Diese Maßnahmen sind besonders vorteilhaft, weil der durchgehende Abstreifer ein vollständiges Abräumen der überstrichenen Bereiche der Rinne gewährleistet, unabhängig davon, ob die Rührwerksarme zwischen sich Räume freilassen. Eine Schneisenbildung wird daher sicher vermieden.

Bei weiteren bevorzugten Ausgestaltungen der Erfindung ist in dem Stutzen für den Ablauf der ausgeschmolzenen Gelatine ein Schauglas angeordnet, stromabwärts des Schauglases ist ein T-Stück angeschlossen und von dem T-Stück gehen über Ventile verschließbare Leitungen für den Abzug von Gelatine bzw. Fett ab.

Diese Maßnahme hat den Vorteil, daß auf einfache Weise eine Trennung der sich unten absetzenden ausgeschmolzenen Gelatine von dem oben aufschwemmenden ausgeschmolzenen Fett möglich ist. Die geschmolzene Gelatine und das Fett unterscheiden sich nämlich optisch deutlich, so daß durch Beobachtung des Schauglases der Zeitpunkt leicht erkannt werden kann, an dem die Gelatine vollständig abgeflossen ist und das Fett nachzuströmen beginnt. Durch wechselseitiges Verschließen bzw. Öffnen der Ventile kann nun das Fett in eine andere Leitung abgelassen werden als zuvor die Gelatine.

Weitere bevorzugte Ausgestaltungen der Erfindung zeichnen sich durch folgendes aus:

Bei einer bevorzugten Ausgestaltung der Erfindung ist die Rinne im Abstand vom Tankboden angeordnet.

Diese Maßnahme hat den Vorteil, daß der Hohlraum unterhalb des Siebes über den gesamten Boden des Tanks durchgeht, so daß die gelöste Gelatine mit nur einem einzigen Ablaßstutzen abgezogen werden kann. Außerdem ergibt diese Bauweise mit durchgehendem Hohlraum zu beiden Seiten der Rinne den Vorteil, daß der Hohlraum leicht gereinigt werden kann, weil sich keine Ecken bilden, in denen sich Material festsetzen könnte.

Bei anderen Ausgestaltungen der Erfindung sitzt die Rinne jedoch auf dem Tankboden auf.

Diese Maßnahme hat den Vorteil, daß eine konstruktiv einfachere Lösung entsteht, die kostengünstiger hergestellt werden kann, weil es auch nicht erforderlich ist, das Sieb im Abstand oberhalb des Tankbodens mechanisch abzustützen.

Weiter kann eine Variante der Erfindung sich dadurch auszeichnen, daß die Rinne durch den Tankboden selbst gebildet ist, von dem das Sieb beidseitig der Förderschnecke abgeht.

Diese Maßnahme hat den Vorteil, daß eine noch einfachere Tankkonstruktion zur Verfügung steht, weil ein Teil der Rinne durch den Tankboden selbst gebildet wird und die Siebbleche nur beidseits des als Rinnenboden dienenden Streifens des Tankbodens aufgesetzt, z.B. aufgeschweißt werden müssen.

Bei einer weiteren Gruppe von Ausführungsbeispielen ist die Förderschnecke in einer länglichen Ausbuchtung des Tankbodens angeordnet.

Diese Maßnahme hat den Vorteil, daß die Förderschnecke weitgehend aus dem Inneren des zylindrischen Abschnittes des Tanks verschwindet, so daß Rührwerke mit sehr großem Umfangskreis eingesetzt werden können. Es versteht sich, daß auch bei diesen Ausführungsbeispielen die Rinne unter Wahrung eines Abstandes bis in die Ausbuchtung hineinreichen oder aber im Bereich der Ausbuchtung oder im Übergang der Ausbuchtung an den Tankboden angesetzt werden kann.

Bei weiteren Ausführungsbeispielen der Erfindung ist mindestens ein Stutzen mit einer Wasser-Zuleitung verbunden und gegen das Sieb gerichtet.

Diese Maßnahme hat den Vorteil, daß das zum Spülen, Behandeln oder Ausschmelzen benötigte Kalt- oder Warmwasser unter Druck durch das Sieb hindurch gelangen kann, wobei sich anders als bei einer in der Ebene des Siebes erfolgenden Einströmung das Wasser besonders gleichmäßig verteilt.

Dies gilt insbesondere dann, wenn bei einem weiteren Ausführungsbeispiel der Erfindung das Sieb in der Verlängerung der Stutzenachse bereichsweise ungelocht ausgebildet ist.

Das Sieb wirkt in diesem Falle nämlich als Prallplatte und das aus dem Stutzen unter hohem Druck in den Hohlraum einströmende Kalt- oder Warmwasser wird von der Prallplatte reflektiert und verteilt sich sehr gleichmäßig im Inneren des Hohlraumes und damit auch des Tanks. Dies ist von besonderem Vorteil dann, wenn die noch kalten Ausgangsprodukte nach Durchlaufen der Wasch- und Behandlungsbäder jetzt mit Heißwasser aufgeheizt werden sollen. In der Praxis geht man nämlich so vor, daß man aus der Temperatur der Ausgangsmaterialien und deren Menge die Menge und die Temperatur des Wassers derart bestimmt, daß die Mischung von Ausgangsmaterial und Wasser schlußendlich eine vorbestimmte Endtemperatur von z.B. 50° C erhält. Ist nun das Ausgangsmaterial verhältnismäßig kalt, was besonders dann der Fall sein kann, wenn teilweise tiefgefrorenes Ausgangsmaterial verwendet wird, so ist es erforderlich, entsprechend heißes Wasser von z.B. 80° C oder mehr zum Aufheizen und Ausschmelzen zuzugeben. Würde man das Wasser jedoch mit gebündeltem Strahl direkt auf das Ausgangsmaterial geben, würden sich lokale Überhitzungen einstellen, wenn das Heißwasser immer auf die selbe Stelle des Ausgangsmaterials träfe. Es wurde jedoch bereits erwähnt, daß sich beim Ausschmelzen des Glutins eine um so höhere Qualität ergibt, je niedriger die Ausschmelztemperatur ist. Die vorstehend beschriebene Maßnahme stellt daher sicher, daß Gelatine hoher Qualität erzeugt wird, weil durch die sofortige Vermischung und Verteilung des Heißwassers eine gleichmäßige Aufheizung des kalten Ausgangsmaterials ohne lokale Überhitzungen gewährleistet wird.

Die Stirnseitensiebe können bei Ausführungen der Erfindung eben, gewölbt oder kegelig ausgebildet sein, je nachdem, wie dies aus Platzgründen, aus Gründen des speziell verwendeten Prozesses oder aus Kostengründen optimal ist.

Bei Ausführungsbeispielen der Erfindung durchdringt die Förderschnecke das Stirnseitensieb und ist zwischen Stirnseitensieb und stirnseitigem Boden in einem flüssigkeitsdichten Kanal geführt.

Diese Maßnahme hat den Vorteil, daß der Innenraum des Tanks, in dem sich das auszulaugende Ausgangsmaterial befindet, auch im Bereich der Förderschnecke von dem Hohlraum getrennt ist, in den sich die ausgeschmolzene Gelatine sammeln soll. Unter "getrennt" ist dabei zu verstehen, daß die ausgeschmolzene Gelatine diese Trennung passieren kann, die festen Teile des Ausgangsmaterials jedoch nicht.

Alternativ hierzu kann die Führungsschnecke mit ihrer Welle das Stirnseitensieb durchdringen, wobei die Gänge der Förderschnecke nur bis zum Stirnseitensieb geführt sind.

Bei dieser Ausführungsform entfällt der Kanal, weil der Bereich zwischen dem Ende der Gänge der Förderschnecke und der Stirnwand des Tanks ebenfalls zum Hohlraum gehört.

Lediglich im Stirnseitensieb muß für eine Gleitdichtung der Förderschneckenwelle gesorgt werden. Das Stirnseitensieb kann an dieser Stelle entweder als Sieb oder auch ungelocht ausgebildet sein.

Bei einer Variante des Ausführungsbeispiels mit plattenartigen Rührwerksarmen sind die Rührwerksarme an ihrem freien Ende mit Abstreifern versehen.

Diese Maßnahme hat den Vorteil, daß zumindest in den Bereich, in dem die Abstreifer auf Wänden des Tanks oder auf dem Sieb entlanggleiten, eine vollständige Durchmischung des Innenraums des Tanks stattfindet. Andererseits haben die Abstreifer jedoch auch den Vorteil, daß beim Entleeren des Tanks die Wände durch Rotation des Rührwerkes gereinigt werden, wobei dann die von den Abstreifern mitgenommenen Materialreste selbsttätig in den unteren Bereich des rinnenförmig ausgebildeten Siebes gelangen und dort von der Förderschnecke mitgenommen werden.

Besonders bevorzugt ist dabei, wenn das Rührwerk mit seiner Achse unterhalb einer Längsachse des Tanks angeordnet ist.

Durch diese exzentrische Anordnung des Rührwerks wird der Vorteil erreicht, daß eine besonders intensive Durchmischung im unteren Bereich des Tankinneren stattfindet, während an der Oberseite des Tanks ein gewisser Raum ungerührt bleibt. Dies ist jedoch durchaus erwünscht, weil derartige Tanks in der Regel nie ganz voll befüllt werden. Bei Verwendung von Rührwerksarmen mit Abstreifern an ihren freien Enden ergibt sich der Vorteil, daß die Abstreifwirkung im wesentlichen im unteren Bereich des rinnenförmigen Siebes erfolgt. Dies ist vor allem dann erwünscht und vorteilhaft, wenn die durch das Sieb gebildete Rinne unter einem verhältnismäßig flachen Winkel in dem Bereich einmündet, in dem sich die Förderschnecke befindet, weil sich in derartigen flachen Bereichen bevorzugt Materialreste absetzen können.

Bei einer weiteren Variante der Erfindung ist das Rührwerk um einen endlichen Winkel beidseits zur Vertikalen oszillierend betreibbar.

Dieses Einstellen eines sogenannten "Pendelganges" hat den Vorteil, daß die radial abstehenden Rührwerksarme das Ausgangsmaterial nur in einem Bereich unmittelbar oberhalb der Förderschnecke hin- und herbewegen. Diese Bewegung hat den Vorteil, daß beim Entleeren des Tanks eine Brückenbildung oberhalb der Förderschnecke sicher vermieden wird. Während des Rührens des Ausgangsmaterials ergibt sich der Vorteil, daß keine Durchmischung der sich im unteren Bereich absetzenden Gelatine mit dem oben aufschwimmenden Fett erfolgt, insbesondere wenn die Rührwerksarme um jeweils 180° gegeneinander versetzt auf der Rührwerkswelle angeordnet sind, so daß beim Einstellen des Pendelganges eine Gruppe von Rührwerksarmen nach unten und die andere Gruppe senkrecht nach oben zeigt.

Es versteht sich jedoch, daß unter "Pendelgang" auch eine Betriebsweise verstanden werden kann, bei der die Rührwerksarme während eines ersten Rührintervalles in einer Drehrichtung und während eines zweiten Rührintervalles in entgegengesetzter Drehrichtung gedreht werden, wobei zwischen diesen Rührintervallen mit gegenläufiger Drehung jeweils Ruheintervalle mit stehendem Rührwerk eingeschoben werden können. Die Umdrehungszahlen können dabei in der Größenordnung von einigen Umdrehungen pro Minute liegen und die Intervalle können ebenfalls einige Minuten lang sein.

Bei weiteren Varianten der Erfindung sind die Rührwerksarme zu einer Radialebene der Rührwerksachse schräg angestellt.

Diese Maßnahme hat den Vorteil, daß zum einen eine axiale Bewegung des Mischgutes während des Rührens überlagert wird, wodurch sich eine besonders intensive Durchrührung ergibt. Andererseits ist auf diese Weise aber auch durch definiertes Anstellen der Ebenen der Rührwerksarme erreichbar, daß beim Entleeren des Tanks die Materialreste zur vorderen Stirnseite des Tanks gefördert werden. Dort müssen sie von der Förderschnecke nur noch über einen kurzen Weg nach außen herausgebracht werden. Es versteht sich dabei, daß selbstverständlich nicht der Rührwerksarm über seine gesamte Länge unter einem festen Winkel schräg zu einer Radialebene angestellt sein muß. Die selbe Wirkung wird nämlich auch dann erzielt, wenn der Rührwerksarm über seine radiale Länge um eine radiale Richtung herum propellerartig kontinuierlich verdreht wird oder aber wenn am freien Ende eines an sonsten geraden Rührwerkarmes schräge Bleche, zweckmäßigerweise mit Abstreifern, angeordnet sind.

Besonders bevorzugt ist bei einer Variante eines Tanks mit Rührflügeln wenn die Rührwerksarme zu beiden Seiten einer radialen Längsmittelebene gegensinnig schräg angestellt sind.

Auf diese Weise ergibt sich nämlich der bereits geschilderte axial gerichtete Fördereffekt, der in vorteilhafter Weise so eingestellt werden kann, daß die festen Bestandteile von beiden Seiten der Längsmittelebene zur Längsmittelebene hin gefördert werden und sich demzufolge die flüssigen Bestandteile, die von den Rührwerksarmen nur deutlich weniger beeinflußt werden, nach außen zu den Stirnseitensieben hin bewegen, wo sie dann in die Hohlräume strömen können.

Bei weiteren Ausführungsbeispielen der Erfindung sind die Rührwerksarme mit Öffnungen versehen.

Diese Maßnahme hat den Vorteil, daß beim Aufbau des Rührwerks eine Material- und damit auch eine Gewichtsersparnis erzielt werden kann, wobei zusätzlich die Rührwirkung gefördert werden kann, wenn die bereits verflüssigten Bestandteile des Tankinhalts durch die Öffnungen in den Rührwerksarmen hindurchtreten können, die festen Bestandteile des Ausgangsmaterials jedoch nicht.

Ferner kann bei einer weiteren Variante dieses Ausführungsbeispiels ein Rührwerksarm über die Länge der Rührwerksachse durchgehend und den halben und ganzen Längsquerschnitt des Tanks im wesentlichen überspannt ausgebildet sein.

Diese Maßnahme hat den Vorteil, daß bei einer einzigen Umdrehung des Rührwerks, bzw. bei doppelseitiger Ausbildung des Rührwerksarmes bereits bei einer halben Umdrehung des Rührwerkes der gesamte Tankinhalt an jedem Punkt im Inneren des Tanks durchmischt und mitgenommen wird. Dabei werden die gesamten Bestandteile des Ausgangsmaterials vollständig am Sieb vorbeigefördert und können dort ihre verflüssigten Bestandteile abgeben.

Bei einer bevorzugten Ausgestaltung eines Ausführungsbeispiels der Erfindung mit einem die Rührwerksarme verbindenden Balken verbindet der Balken eine erste Gruppe von Rührwerksarmen miteinander, während eine zweite Gruppe von Rührwerksarmen etwa 180° zur ersten Gruppe versetzt angeordnet und mit einer kürzeren radialen Länge versehen ist. Bevorzugt ist dabei, wenn Mittel vorgesehen sind, um die Rührwerksarme beim Entleeren zunächst in eine horizontale Lage zu bringen, alsdann die mit dem Balken und dem Abstreifer versehenen Rührwerksarme um etwa 90° zur Förderschnecke hin zu drehen und alsdann um etwa 360° in Gegenrichtung zu drehen.

Diese Maßnahme ist von besonderem Vorteil, weil mit einer einzigen Hin- und einer einzigen Herbewegung eine vollständige Entleerung des Tanks gelingt. Es wird nämlich zuerst während der 90°-Hinbewegung die eine flache Seite des Siebes zur Förderschnecke hin abgeräumt, während bei der nachfolgenden Herbewegung um 360° die andere Seite abgeräumt wird. Eine unerwünschte Übertragung durch die andere Gruppe von Rührwerksarmen ist auf diese Weise nicht möglich, weil deren axiale Länge kürzer ist.

Bei weiteren Ausführungsbeispielen der Erfindung ist das Sieb im zylindrischen oder konischen Abschnitt des Tanks ausgebildet und der als Sieb ausgebildete Abschnitt ist von einem Außenblech im Abstand umgeben.

Diese Maßnahme hat den Vorteil, daß ein vollkommen zylindrischer Rührraum entsteht, weil der Hohlraum für die Ansammlung der ausgeschmolzenen Gelatine jetzt außerhalb der Peripherie des eigentlichen zylindrischen Tankkörpers liegt.

Weiter sind noch Ausführungsbeispiele der Erfindung bevorzugt, bei denen die Schneckenwelle zur Längsachse des Tanks geneigt verläuft.

Auch diese Maßnahme hat den Vorteil, daß die Selbstentleerung erleichtert wird, wenn die Schneckenwelle mit einer umgebenden Rinne entweder schräg in einem zylindrischen Teil des Tanks oder zur Tankwand parallel in einem konischen Abschnitt des Tanks oder aber mit einer konisch zulaufenden Schneckenwanne an einem zylindrischen oder konischen Abschnitt eines Tanks angeordnet ist.

Bei einer weiteren bevorzugten Ausgestaltung der Erfindung ist die Förderschnecke in einer Rinne angeordnet, deren unterer Bereich im Abstand oberhalb einer Längsausbuchtung des Tanks verläuft. Der Tank geht dabei an einem stirnseitigen Boden über eine Kammer in die Längsausbuchtung über, wobei ein Siebblech in der Kammer einen Raum vom Innenraum trennt. Die Förderschnecke durchsetzt das Siebblech und die Kammer und der Raum stehen mit dem Hohlraum zwischen Längsausbuchtung und unterem Bereich in Verbindung.

Diese Maßnahme hat den Vorteil, daß auch dann, wenn die Förderschnecke an ihrer Unterseite zur Vermeidung einer Passierwirkung von einem durchgehenden Blech umgeben ist, die ausgeschmolzene Gelatine an den Tankstirnseiten seitlich in die Kammer und von dort nach unten in den Hohlraum unterhalb der Rinne abströmen kann, die die Schnecke aufnimmt.

Ferner ist noch eine weitere Ausführungsform der Erfindung bevorzugt, bei der von der Rinne ein Schneckenstutzen näherungsweise nach unten unterhalb der Förderschnecke abgeht.

Diese Maßnahme nat den Vorteil, daß die Produktreste nach unten unter Schwerkrafteinfluß auf der Schneckenwanne herausgelangen, ohne daß die Lagerung der Schneckenwelle im Wege steht.

Bei einer bevorzugten Ausgestaltung der Erfindung, bei der der Tank mit einem Ausräumstutzen versehen ist, ist dieser schräg nach vorne und nach unten geneigt.

Diese Maßnahme hat den Vorteil, daß die Selbstentleerung des Tanks nur unter Schwerkrafteinfluß im großen Umfange möglich ist, weil der - schräg nach unten gerichtete Ausräumstutzen eine Rutsche für die Reste des Ausgangsproduktes bildet. Ein unterhalb der Öffnung des Stutzens angebrachter Wagen zum Transportieren dieser Reste wird sich daher weitgehend von selbst befüllen und man muß von Hand nur noch verhältnismäßig wenig Reste aus dem Tank räumen.

Bei einer bevorzugten weiteren Ausgestaltung der Erfindung kleidet das Sieb die untere Tankhälfte im konstanten Abstand von der Tankwand aus.

Diese Maßnahme hat den Vorteil, daß oberhalb des Siebes ein sehr großer Innenraum im Tank verbleibt, so daß Rührwerke mit großem Rührwerksradius verwendet werden können und daher der Tankinhalb in besonders effektiver Weise durchgerührt wird. Auch eröffnet auch diese Variante die Möglichkeit, die freien Enden der Rührwerksarme mit Abstreifern zu versehen, die an der Oberfläche des zylindrisch konturierten Siebes entlanggleiten und daher den Ausräumprozeß ebenfalls fördern.

Bei einer anderen Variante der Erfindung ist das Sieb als V-förmige Rinne ausgebildet.

Diese Maßnahme hat zum einen den Vorteil, daß eine kostengünstige Ausbildung des Siebes möglich ist, weil die Seitenwände des Siebes als ebene Siebbleche oder Siebplatten ausgebildet sein können. Zum anderen hat diese Maßnahme den Vorteil, daß die ebenen Siebbleche mit einem verhältnismäßig großen Steigungswinkel angeordnet werden können, so daß der Selbstentleerungseffekt auf diese Weise gefördert wird, weil die Reste des Ausgangsproduktes an den verhältnismäßig steil verlaufenden Wänden der V-förmigen Rinne von selbst nach unten rutschen.

Bei einer weiteren bevorzugten Ausgestaltung der Erfindung geht das Sieb auf der Stirnseite, die der mit dem Ausräumstutzen versehenen Stirnseite gegenüberliegt, in ein Stirnseitensieb über, das den Innenquerschnitt des Tanks überspannt.

Diese Maßnahme hat den Vorteil, daß im Bereich eines Klöpperbodens des Tanks ein weiterer Freiraum entsteht, in den ausgeschmolzene Gelatine durch das hochkant angeordnete Stirnseitensieb hindurch eintreten kann. Da dieser Raum mit dem Hohlraum unterhalb des Siebes verbunden ist, kann auch die auf diese Weise ausgeschmolzene und gewonnene Gelatine durch die ohnehin vorhandene Stutzen abgezogen werden.

Weiter ist noch eine Ausführungsform der Erfindung bevorzugt, bei der der Ausräumstutzen einen Verschlußdeckel mit einem vorstehenden Einsatz aufweist, dessen Außenkontur im verschlossenen Zustand des Ausräumstutzens stetig an eine Innenkontur des Tanks anschließt.

Diese Maßnahme hat den Vorteil, daß sich im Bereich des verschlossenen Ausräumstutzens keine toten Ecken bilden können, in denen sich unbearbeitetes oder ungeschmolzenes Ausgangsmaterial ansammelt. Außerdem ist es möglich, durch geeignete Formgestaltung die Außenkontur des Einsatzes so auszubilden, daß sie im geöffneten Zustand des Ausräumstutzens eine Rutsche für die Reste bildet, um diese in eine Position im seitlichen Abstand vom Tank zu befördern.

Bei einer weiteren bevorzugten Ausgestaltung der Erfindung ist das Sieb im zylindrischen oder konischen Abschnitt des Tanks ausgebildet, und der als Sieb ausgebildete Abschnitt ist von einem Außenblech im Abstand umgeben.

Diese Maßnahme hat den Vorteil, daß im Innenraum des Tanks eine rein zylindrische Oberflächenkonfiguration des Tanks entsteht, die besonders leicht durchgerührt, von Abstreifern überstrichen und schließlich von Hand gereinigt werden kann.

Weiterhin ist bevorzugt, wenn die durch die Stirnseitensiebe gebildeten Hohlräume mittels eines über die Länge des Tanks durchgehenden Verbindungskanals miteinander verbunden sind.

Dies hat den Vorteil, daß lediglich ein einziger Stutzen zum Abziehen der Gelatine vorgesehen werden muß.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Seitenansicht eines Ausführungsbeispiels eines erfindungsgemäßen Tanks;

Fig. 2 eine Ansicht des Tanks der Fig. 1, von der linken Stirnseite her;

Fig. 3 eine Ansicht ähnlich Fig. 1, jedoch im Schnitt;

Fig. 4 eine Schnittdarstellung entlang der Linie IV-IV von Fig. 3;

Fig. 5 bis 7 im vergrößerten Maßstab verschiedene Varianten zur Erläuterung der Positionierung und Ausbildung einer eine Förderschnecke aufnehmenden Siebrinne;

Fig. 8 bis 11 verschiedene Varianten von Stirnseitensieben, wie sie beim Tank gemäß Fig. 1 eingesetzt werden können;

Fig. 12 eine Darstellung ähnlich Fig. 4, jedoch zur Erläuterung weiterer Varianten der Erfindung;

Fig. 13 eine weitere Darstellung ähnlich den Fig. 4 und 12 zur Erläuterung noch anderer Varianten der Erfindung;

Fig. 14 eine Darstellung ähnlich Fig. 3 zur Erläuterung weiterer Ausführungsbeispiele der Erfindung;

Fig. 15 eine Darstellung ähnlich Fig. 1 zur Erläuterung der Bauweise eines konischen Tanks;

Fig. 16 eine Darstellung ähnlich Fig. 15, jedoch zur Erläuterung eines doppelkonischen Tanks;

Fig. 17 eine weitgehend schematisierte Darstellung ähnlich den Fig. 3 und 14 zur Erläuterung besonderer Anordnungen von Förderschnecken;

Fig. 18 eine Detaildarstellung zur Erläuterung eines speziell ausgebildeten Abstreifers;

Fig. 19 eine weitere Querschnittsdarstellung zur Erläuterung einer weiteren Konfiguration eines verwendeten Siebes;

Fig. 20 und 21 Ausschnittsdarstellungen zur Erläuterung weiterer Konfigurationen an beiden Enden einer Förderschneckenwanne;

Fig. 22 eine Innenansicht, von der Seite gesehen, eines Ausführungsbeispiels eines erfindungsgemäßen Tanks;

Fig. 23 den Tank der Fig. 22 in einer Ansicht von der Stirnseite;

Fig. 24 eine Seitenansicht, teilweise aufgebrochen, eines Ausführungsbeispiels eines erfindungsgemäßen Tanks;

Fig. 25 eine Querschnittsdarstellung entlang der Linie XXV-XXV von Fig. 24;

Fig. 26 eine Darstellung ähnlich Fig. 25, jedoch für eine Variante des in den Fig. 24 und 25 dargestellten Tanks;

Fig. 27 eine Seitenansicht eines weiteren Ausführungsbeispiels eines erfindungsgemäßen Tanks, teilweise aufgebrochen;

Fig. 28 eine Ausschnittsdarstellung zur Erläuterung eines Verschlußes für einen Ausräumstutzen, wie er beim Ausführungsbeispiel der Fig. 24 und 25 verwendet werden kann;

Fig. 29 eine stark schematisierte Seitenansicht, im Querschnitt und im verkleinerten Maßstabe einer weiteren Ausführungsform eines erfindungsgemäßen Tanks;

Fig. 30 eine Darstellung ähnlich Fig. 24, jedoch noch weiter verkleinert und noch weiter - schematisiert, einer weiteren Ausführungsform erfindungsgemäßer Tanks.

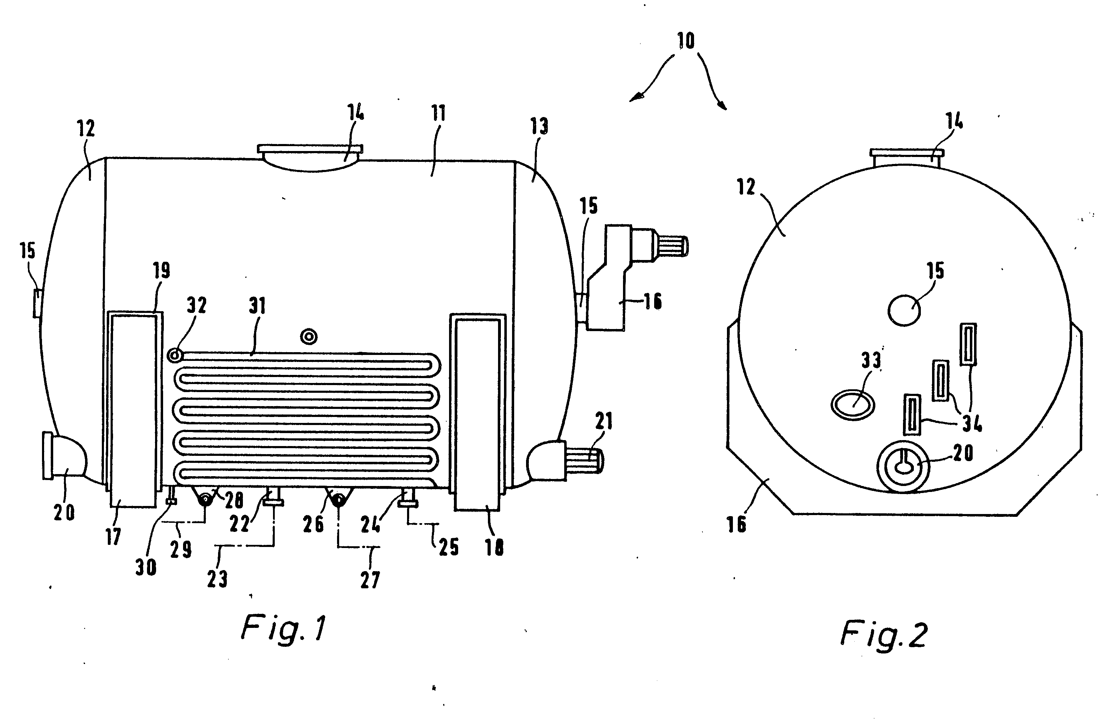

In den Fig. 1 bis 4 bezeichnet 10 insgesamt einen Tank zur Herstellung von Gelatine, der einen zylindrischen Abschnitt 11 und daran angesetzte Böden 12, 13 aufweist. Der Tank 10 ist vorzugsweise aus Edelstahl gefertigt, kann jedoch auch aus Stahl oder Kunststoff bestehen. Ein typisches Ausführungsbeispiel des Tanks 10 hat eine Gesamtlänge von ca. 6 m und einen Durchmesser von ca. 4 m, so daß sich insgesamt ein Tankinhalt von ca. 60 m$^3$ ergibt. Tanks dieser Art werden üblicherweise in einem Volumenbereich zwischen 5 m$^3$ und 100 m$^3$ konzipiert.

In der Mitte des zylindrischen Abschnittes 10 ist oben ein Einfülldom 14 verhältnismäßig großen Durchmessers angebracht.

Eine in den Fig. 1 und 2 nur abschnittsweise sichtbare Rührwerkswelle 15 wird von einem seitlich angebrachten Motor 16 mit einer Drehzahl von typischerweise 0,2 bis 20 U/min als Festdrehzahl oder stufenlos regelbar angetrieben. Der zylindrische Abschnitt 11 ruht auf zwei beabstandeten Füßen 17, 18, die vorzugsweise über Verstärkungsbleche 19 an den zylindrischen Abschnitt 11 angeschweißt sind.

Im Bodenbereich erkennt man einen Schneckenstutzen 20 am Boden 12 und am gegenüberliegenden Boden 13 einen Antriebsmotor 21 für eine Förderschnecke, die weiter unten noch beschrieben werden wird.

An der Unterseite des zylindrischen Abschnittes 11 erkennt man einen ersten Stutzen 22, der an eine Kaltwasser-Zuleitung 23 angeschlossen ist. Ein zweiter Stutzen 24 ist an einer Heißwasser-Zuleitung 25 angeschlossen. Ein dritter Stutzen 26 ist an eine Produktleitung angeschlossen. Ein vierter Stutzen 28 ist ebenfalls eine Produktleitung 29 angeschlossen.

Etwa über den halben Durchmesser auf der Unterseite des zylindrischen Abschnittes 11 ist ein Wärmetauscher angebracht, der im dargestellten Ausführungsbeispiel einen Eingang 30 einer Wärmetauscherspirale 31 und einen zugehörigen Ausgang 32 aufweist. Die Wärmetauscherspirale 31 ist in gut wärmeleitender Verbindung mit dem zylindrischen Abschnitt 11 verbunden und kann mit an sich bekannten und daher nicht nochmals dargestellten Mitteln mit Heißwasser oder Heißdampf durchströmt werden.

Wie man der Stirnansicht der Fig. 2 entnehmen kann, ist der Boden 12 mit einem Mannloch 33 sowie mit Schaugläsern 34 versehen, wie dies ebenfalls an sich bekannt ist.

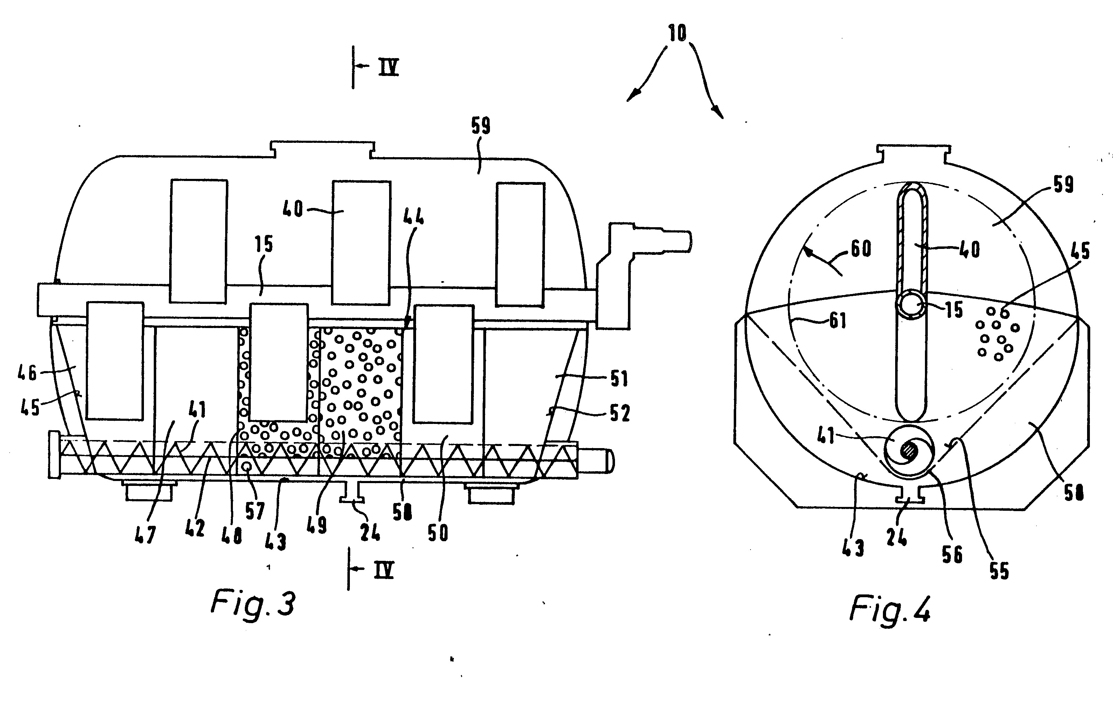

Aus der Querschnittsdarstellung der Fig. 3 und 4 erkennt man, daß auf der horizontalachsigen Rührwerkswelle 15 plattenförmige Rührwerksarme 40 im Abstand voneinander angeordnet sind. Wie man aus Fig. 4 erkennen kann, sind sowohl die Rührwerkswelle 15 wie auch die Rührwerksarme 40 hohl ausgebildet und in ihnen können wiederum Wärmetauscher angeordnet sein, falls dies im Einzelfall erforderlich sein sollte.

Eine Förderschnecke 41 mit einer Förderschneckenwelle 42 ist oberhalb eines Tankbodens 43 angeordnet. Die Förderschnecke 41 befindet sich damit im Innenraum des zylindrischen Abschnitts 41, der mittels eines gesamthaft mit 44 bezeichneten Siebes von einem außen und unten angeordneten Hohlraum getrennt sein kann. Das Sieb 44 besteht aus einem ersten stirnseitigen Siebblech 45, einem ersten und einem zweiten Seitenblech 46, 47, einem ersten und zweiten seitlichen Siebblech 48, 49 und einem dritten und vierten Seitenblech 50, 51. Diese Seitenbleche bzw. seitlichen Siebbleche sind jeweils auf beiden Seiten der Förderschnecke 41 angeordnet. Auf der dem ersten stirnseitigen Siebblech 45 gegenüberliegenden Seiten ist ein entsprechendes zweites stirnseitiges Siebblech 52 vorgesehen.

Die Wirkungsweise des Tanks 10 ist wie folgt:

Bei verschlossenem Schneckenstutzen 20 und stillstehender Förderschnecke 41 sowie ebenfalls verschlossenem zweiten Stutzen 24 wird zunächst durch den Einfülldom 14 das Ausgangsmaterial in den Tank 10 eingefüllt. Durch den Kaltwassereinlauf 22 wird nun durch das Sieb 44 hindurch Kaltwasser in den Innenraum 59 eingelassen und das Rührwerk gedreht, um das Ausgangsmaterial zu säubern. In entsprechender Weise können sich weitere Wasch-oder Behandlungsbäder anschließen, wobei das kalte Wasser jeweils wieder durch in den Fig. nicht näher dargestellte Abläufe abgelassen werden kann.

Ist das Ausgangsmaterial genügend gesäubert, gespült und behandelt worden, wird durch den Heißwassereinlauf, nämlich den zweiten Stutzen 24, Heißwasser eingelassen. Dies geschieht mit einer Menge und mit einer Temperatur, die zuvor anhand der Menge und Temperatur des Ausgangsmaterials bestimmt wurde. Auf diese Weise stellt sich nach dem Einlassen des Heißwassers und nach dem Durchrühren des Ausgangsmaterials eine vorbestimmte Endtemperatur ein. Diese Endtemperatur wird im ersten Arbeitsgang so niedrig wie möglich eingestellt werden, weil die Qualität von Gelatine um so besser ist, je niedriger die Prozeßtemperatur beim Ausschmelzen der Gelatine eingestellt wurde.

Die ausgeschmolzene Gelatine tritt nun beim weiteren Durchrühren mittels des Rührwerks durch das Sieb 44 hindurch und sammelt sich in den Räumen beidseits der stirnseitigen Siebbleche 45, 52 sowie im Hohlraum 58 unterhalb der Förderschnecke 41. Die ausgeschmolzene Gelatine kann nun durch die Produktabläufe, nämlich den dritten Stutzen 26 und den vierten Stutzen 28, abgezogen werden. Auch ist es zweckmäßig, wenn man zu diesem Zeitpunkt das Fett abzieht, das sich infolge seines geringeren Gewichtes oben auf dem Ausgangsmaterial gesammelt hat.

Es schließen sich nun ggf. noch weitere Ausschmelzphasen mit jeweils ansteigender Prozeßtemperatur an, um das Ausgangsmaterial so vollkommen wie möglich auszulaugen.

Nach Abschluß der Ausschmelzvorgänge wird nun der Schneckenstutzen 20 geöffnet und die Förderschnecke 41 durch Einschalten des Motors 21 in Betrieb genommen. Die Ausgangsmaterialreste, die eine sehr rutschige Konsistenz haben, rutschen nun nach und nach unten in den Bereich der Förderschnecke 41 und werden von dieser durch den Schneckenstutzen 20 hindurch in geeignete Behälter oder Wagen gebracht, von wo sie einer Weiterverarbeitung zugeführt werden. Während des Entleerens des Tanks 10 kann es zweckmäßig sein, das Rührwerk ständig oder intervallweise zu betreiben, weil das Rührwerk mit den Rührwerksarmen 40 des Ausräumprozeß fördern kann, wie dies weiter unten anhand verschiedener Varianten der Erfindung noch näher erläutert werden wird.

Unter intervallweisem Rühren kann dabei auch eine Betriebsart verstanden werden, bei der in einem ersten Rührintervall das Rührwerk sich in der einen Richtung und in einem anderen Rührwerksintervall in der entgegengesetzten Richtung dreht. Diese Rührintervalle mit unterschiedlicher Drehrichtung des Rührwerks können unmittelbar aneinander anschließen, sie können aber auch durch Ruheintervalle zeitlich voneinander getrennt sein.

Die Siebbleche 45 bis 52 können insgesamt als Siebbleche ausgebildet sein. Im Ausführungsbeispiel der Fig. 3 und 4 ist jedoch dargestellt, daß es auch ausreichen kann, wenn nur die stirnseitigen Siebbleche 45, 52 und je zwei seitliche Siebbleche 48, 49 die Siebfunktion übernehmen. Die übrigen Seitenbleche 46, 47, 50, 51 können bei diesem Ausführungsbeispiel aus Kostengründen geschlossen ausgebildet sein.

Die Anordnung des Siebes 44 mit den Blechen 45 bis 52 ist so getroffen, daß insgesamt eine mit 55 bezeichnete Rinne entsteht, in deren unterem Bereich 56 sich die Förderschnecke 41 befindet.

Der untere Bereich 56 ist vorzugsweise bis etwa zur halben Höhe der Förderschnecke 41 ungelocht ausgebildet, um zu vermeiden, daß die Förderschnecke 41 Material durch Öffnungen im unteren Bereich 56 hindurchpassiert. Allerdings können an einigen definierten Stellen des unteren Bereichs 56 auch isolierte Abflußöffnungen vorgesehen sein, wie in Fig. 3 mit 57 angedeutet.

Das Sieb 44 unterteilt somit das Innere des Tanks 10 in einen Hohlraum 58 unterhalb und einen Innenraum 59 oberhalb des Siebes 44.

In Fig. 4 ist noch mit 60 der Radius eines Umfangskreises 61 angedeutet, den die Rührflügel 40 bei Rotation beschreiben. Es versteht sich, daß der Radius 60 so gewählt sein muß, daß die freien Enden der Rührflügel 40 weder mit der Förderschnecke 41 noch mit den Blechen des Siebes 44 in Kollision geraten.

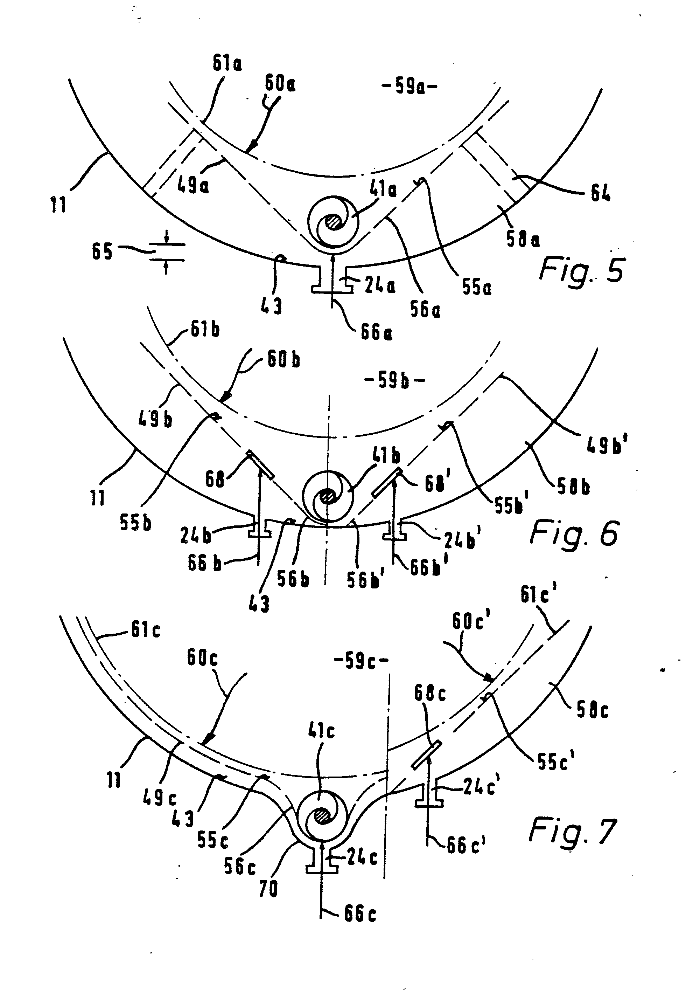

Aus der vergrößerten Darstellung der Fig. 5, in der alle Bezugszeichen der vorhergehenden Fig. mit einem "a" versehen sind, ist die in Fig. 4 getroffene Anordnung im einzelnen zu erkennen.

Man erkennt, daß die Förderschnecke 41 dicht oberhalb des ungelochten unteren Bereichs 56 der Rinne 55a angeordnet ist. Die untere Scheitellinie des unteren Bereichs 56 befindet sich in einem Abstand 65 oberhalb des Tankbodens 43. Der Hohlraum 58 unterhalb des Siebes 44 geht daher auf beiden Seiten durch und es sind lediglich mit 64 angedeutete Abstützungen erforderlich, um das auf dem Sieb 44 lastende Gewicht des Ausgangsmaterials abzufangen.

Bei dieser Konfiguration ist der zweite Stutzen 24a direkt unterhalb des unteren Bereichs 56 angeordnet. Wird nun ein Wasserstrahl 66a durch den zweiten Stutzen 24a unter hohem Druck eingelassen, trifft dieser auf den ungelochten unteren Bereich 56 und wird infolgedessen durch den gesamten Hohlraum 58a verwirbelt, der sich unterhalb des Siebes 44 befindet.

Bei der Variante der Fig. 6 mit dem Bezugszeichenzusatz "b" liegt die Förderschnecke 41b tiefer, weil der untere Bereich 56b auf dem Boden 43 des Tanks 10 aufsitzt. Infolgedessen kann der Radius 60b des Umfangskreises 61b etwas größer gewählt werden. Allerdings besteht in diesem Falle kein durchgehender Hohlraum 58b auf beiden Seiten der Förderschnecke 41 b mehr.

In der linken Hälfte der Fig. 6 wird die Rinne 55b dadurch gebildet, daß z.B. das zweite seitliche Siebblech 49b tangential zwischen Förderschnecke 41b und boden 43 einläuft und dort den die Förderschnecke 41b dicht umschlingenden unteren Bereich 56b bildet.

Im Gegensatz dazu zeigt die rechte Hälfte der Fig. 6 eine Variante, bei der das zweite seitliche Siebblech 49b' in geringfügigem Abstand von der Förderschnecke 41b auf den Boden 43 aufsetzt und dort beispielsweise angeschweißt ist. Die Rinne 55b' wird demzufolge durch das zweite seitliche Siebblech 49b' sowie den Boden 43 selbst gebildet.

Da der Hohlraum 48b beim Ausführungsbeispiel der Fig. 6 nicht mehr beidseits der Förderschnecke 41b durchgeht, sind auf diesen beiden Seiten separate zweite Stutzen 24b bzw. 24b' erforderlich, die jeweils mit einem Wasserstrahl 66b bzw. 66b' beschickt werden können.

Da die Wasserstrahlen 66b, 66b' auf Bereiche beispielsweise der zweiten seitlichen Siebblech 49b, 49b' treffen, ist zur Erzielung einer guten Verwirbelung des Wassers vorgesehen, dort ungelochte Bereiche 68 bzw. 68' vorzusehen, die wiederum als Prallplatten für die Wasserstrahlen 66b bzw. 66b' wirken.

Beim Ausführungsbeispiel der Fig. 7 mit dem Bezugszeichenzusatz "c" ist eine weitere Absenkung der Förderschnecke 41c dadurch erreicht worden, daß an den Boden 43 des Tanks 10 eine achsparallele Ausbuchtung 70 angesetzt wurde, die die Förderschnecke 41c aufnimmt.

In der linken Hälfte der Fig. 7 ist wiederum eine Alternative dargestellt, in der das zweite seitliche Siebblech 49, das jetzt dicht neben der Tankwand angeordnet ist, in einen unteren Bereich 56c übergeht, der die Förderschnecke 41 auf ihrer Unterseite umschlingt, so daß zwischen dem unteren Bereich 56c und der Ausbuchtung 70 wiederum ein Abstand verbleibt. Infolgedessen kann wiederum ein einziger zentraler zweiter Stutzen 24c vorgesehen werden, durch den ein Wasserstrahl 66c geschickt werden kann, der wiederum auf den ungelochten, unteren Bereich 56c trifft.

Alternativ hierzu kann wiederum, wie rechts der strichpunktierten Linie in Fig. 7 dargestellt, die Rinne 55c im Abstand vcn der Förderschnecke 41c an dem Tankboden 43 enden. Es sind dann wiederum seitliche Stutzen 24c' erforderlich, denen entsprechende ungelochte Bereiche 68c im Siebblech gegenüberstehen.

Man erkennt aus Fig. 7, daß die erzielbaren Radien 60c bzw. 60c' der Umfangskreise 61c bzw. 61c' deutlich größer sind als bei den Ausführungsbeispielen der Fig. 6 und insbesondere 5, so daß mit dieser baulich aufwendigeren Lösung ein nahezu vollständiges Durchrühren des gesamten Tankinhalts möglich ist.

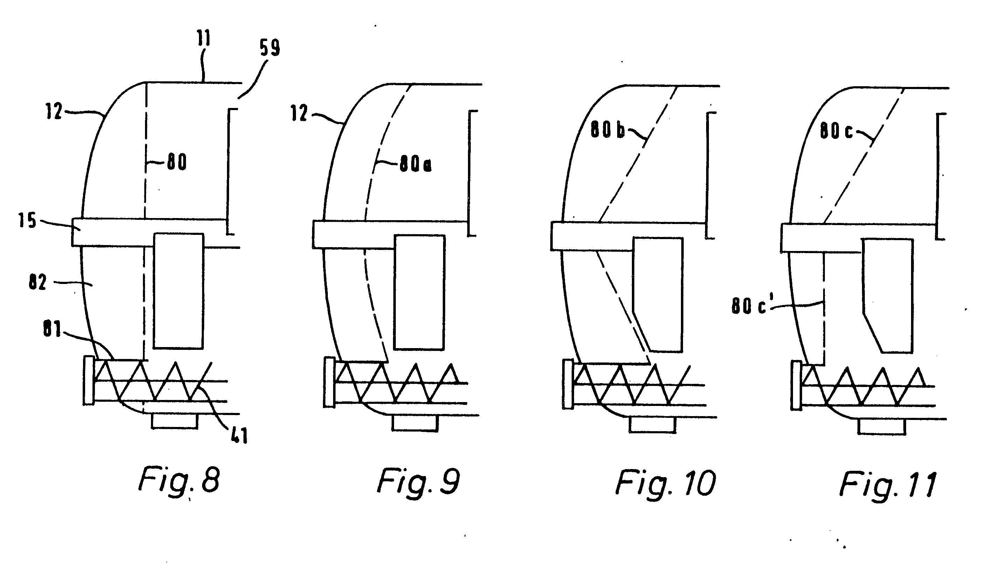

Fig. 8 zeigt einen Längsschnitt ähnlich dem der Fig. 3, jedoch teilweise abgebrochen, und man erkennt ein Stirnseitensieb 80, das sich etwa in einer Radialebene im Übergang von zylindrischen Abschnitt 11 zum Boden 12 befindet. Das Stirnseitensieb 80 teilt damit einen verhältnismäßig großen Raum 82 vom Innenraum 59 des Tanks 10 ab, wobei Wasser oder Gelatine durch das Stirnseitensieb 80 hindurchtreten und aus dem Raum 82 mittels geeigneter Stutzen abgezogen werden kann. Der zusätzliche Raum 82 ist dann besonders vorteilhaft, wenn, wie beispielsweise in Fig. 7 dargestellt, das übrige Sieb 44 so eng an der Behälterwand anliegt, daß nur ein geringer Zwischenraum zwischen Sieb und Behälterwand verbleibt.

Das Stirnseitensieb 80 wird von der Rührwerkswelle 15 durchdrungen und ebenso von der Förderschnecke 41. Da die Förderschnecke 41 sich im Innenraum 59 befindet, wird ein Kanal 81 an das Stirnseitensieb 80 angesetzt, in dem sich die Förderschnecke 41 drehen kann. Das Innere des Kanals 81 ist daher mit dem Innenraum 59 des Tanks 10 verbunden und vom Raum 82 getrennt.

Als Alternative zum Ausführungsbeispiel der Fig. 8 ist das der Fig. 9 zu betrachten, bei dem das Stirnseitensieb 80a gewölbt ist und zwar vorzugsweise parallel zur Wölbung des Bodens 12. Auf diese Weise ergibt sich eine mechanisch stabilere Konstruktion des Stirnseitensiebes 80a, allerdings unter Inkaufnahme eines höheren Fertigungsaufwandes.

Einen möglichen Kompromiß zwischen diesen beiden Gesichtspunkten stellt das Stirnseitensieb 80b der Fig. 10 dar, das konisch ausgebildet ist.

Schließlich kommt auch eine weitere Konstruktion in Frage, die in Fig. 11 dargestellt ist und bei der ein oberer Abschnitt 80c des Stirnseitensiebes gewölbt oder konisch ausgebildet ist, während ein unterer Abschnitt 80c' eine ebene Gestalt aufweist.

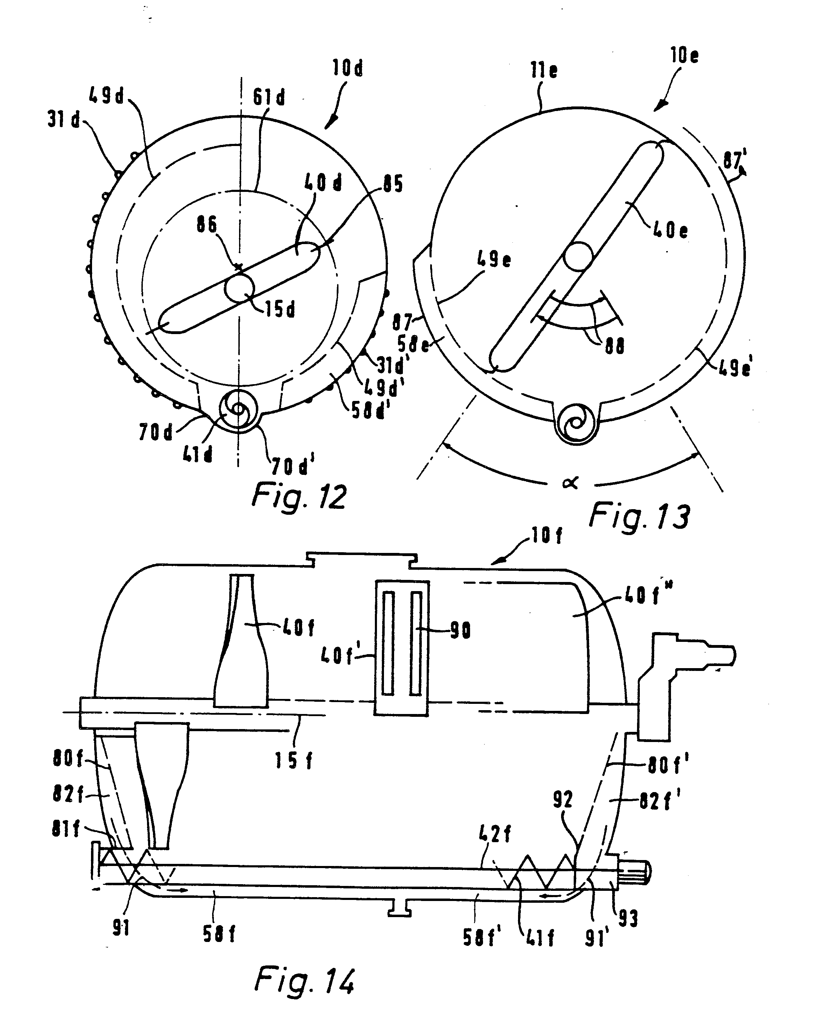

Bei der Darstellung der Fig. 12 mit dem Bezugszeichenzusatz "d" ist in der linken Hälfte eine Darstellung gewählt, bei der das zweite seitliche Siebblech 49d von oben kommend über den gesamten Umfang des Tanks 10d verläuft, bis es kurz vor Erreichen der Förderschnecke 41d nach Art der Fig. 7, rechte Hälfte, in die Tankwand übergeht. Auf der Außenseite des Tanks sind mit 31d Wärmetauschelemente eingezeichnet, die ebenfalls im wesentlichen über die gesamte Oberfläche des Tanks verteilt angeordnet sind. Die Förderschnecke 41d befindet sich bei diesem Ausführungsbeispiel in einem Schneckenkasten, der als flache Ausbuchtung 70d ausgestaltet ist.

Die Rührwerkswelle 15d ist im Abstand unterhalb einer Längsachse 86 des Tanks 10d angeordnet. Es ergibt sich somit ein exzentrischer Umfangskreis 61d, der an seiner tiefsten Stelle tangential zum Umfang der Förderschnecke 41d verläuft. Die Rührwerksarme 40d sind an ihren freien Enden mit Abstreifern 85 versehen, die vorzugsweise elastisch ausgestaltet sind. Aufgrund der exzentrischen Anordnung des Rührwerks wird bei diesem Ausführungsbeispiel erreicht, daß vor allem der flachere Bereich des zweiten seitlichen Siebblechs 49d während der Entleerung des Tanks überstrichen wird.

In der rechten Hälfte der Fig. 12 ist zu erkennen, daß das zweite seitliche Siebblech 49d' nur über einen Teil des Umfanges ausgebildet ist und auch die Wärmetauscher 31d' erstrecken sich nur über den Teil der Tankoberfläche, innerhalb dessen sich der Hohlraum 58d' befindet. Dies hat den Vorteil, daß das Tankinnere nach Art eines Wasserbades erhitzt wird, weil die Wärmetauschelemente 31d' auf das Tankinnere nur über eine Erwärmung der bereits verflüssigten Gelatine im Hohlraum 58d' wirken können und auf diese Weise eine lokale Überhitzung von Festbestandteilen des Ausgangsmaterials im Tankinneren vermieden wird.

Auch zeigt die rechte Hälfte der Fig. 12 bei 70d', daß die Schneckenwanne mit steileren Wänden versehen werden kann, wenn dies im Einzelfall zweckmäßig sein sollte.

In Fig. 13 ist mit dem Bezugszeichenzusatz "e" eine Variante des Tanks 10e dargestellt, bei der das zweite seitliche Siebblech 49e im zylindrischen Abschnitt 11e selbst angeordnet ist. Der zylindrische Abschnitt 11e ist zu diesem Zweck in der linken Hälfte der Fig. 13 bei 49e etwa über 1/4 seines Umfanges mit entsprechenden Lochungen versehen, während die rechte Hälfte von Fig. 13 bei 49e' zeigt, daß die Lochungen auch über einen beliebigen größeren oder kleineren Bereich vorgesehen sein können.

Fig. 13 zeigt ferner, daß das Rührwerk im "Pendelgang" betrieben werden kann, in dem es nur um einen Winkel α in Richtung der Pfeile 88 oszillierend um die Vertikale bewegt wird. Der Winkel α kann z.B. 90° betragen. Auf diese Weise rühren die um 180° versetzten Rührwerksarme 40e jeweils nur oben oder unten im Tank 10e, also nur im Bereich der Gelatine (unten) oder des Fettes (oben), ohne diese beiden zu vermischen.

Zur Bildung des Hohlraums 58e ist ein Außenblech 87 konzentrisch zum zylindrischen Bereich 11e angeordnet.

In Fig. 14 ist mit einem Bezugszeichenzusatz "f" zunächst veranschaulicht, daß die Rührflügel 40f zu einer Radialebene angestellt sein können, um bei Drehung des Rührwerks eine Förderwirkung in axialer Richtung zu erzeugen.

Mit 40f' ist eine Variante eines Rührflügels bezeichnet, die mit Öffnungen 90 versehen ist, wobei die Öffnungen 90 so dimensioniert sind, daß die verflüssigten Bestandteile des Tankinhaltes durch die Öffnungen 90 hindurchtreten können, während die festen Bestandteile von den verbleibenden durchgehenden Bereichen des Armes 40f' zurückgehalten werden.

Schließlich ist mit 40f'' ein über die gesamte Länge der Rührwerkswelle 15f durchgehender Rührflügel angedeutet, der bei einer Drehung des Rührwerks den gesamten Tankinhalt vollständig wendet.

Links unten in Fig. 14 ist nochmals die bereits in Fig. 8 gezeigte Anordnung veranschaulicht, bei der sich links vom Stirnseitensieb 80f der Raum 82f befindet. Ist unterhalb der Förderschnecke 41f der Hohlraum 58f über die Länge des Tanks 10f durchgehend ausgebildet, können die ausgeschmolzenen Gelatinebestandteile in Richtung eines Pfeiles 91 am Kanal 81f vorbei ohne Probleme zirkulieren.

Bei der rechts unten in Fig. 14 dargestellten Variante hierzu ist ebenfalls ein Stirnseitensieb 80f' mit einem davon abgetrennten Raum 82f' vorgesehen. Das Stirnseitensieb 80f' geht nach unten jedoch in eine Trennwand 92 über, die durchgehend oder als Sieb ausgebildet sein kann. Die Trennwand 92 wird nur von der Förderschneckenwelle 42f durchdrungen, während die Gänge der Förderschnecke 41f nur bis zur Trennwand 92 reichen. Auf diese Weise bildet sich in Fig. 14 rechts von der Trennwand 92 ein weiterer Raum 93, so daß auch hier entlang eines Pfeiles 91' eine Zirkulation der ausgeschmolzenen Gelatine vom Raum 82f' zum Hohlraum 58f stattfinden kann.

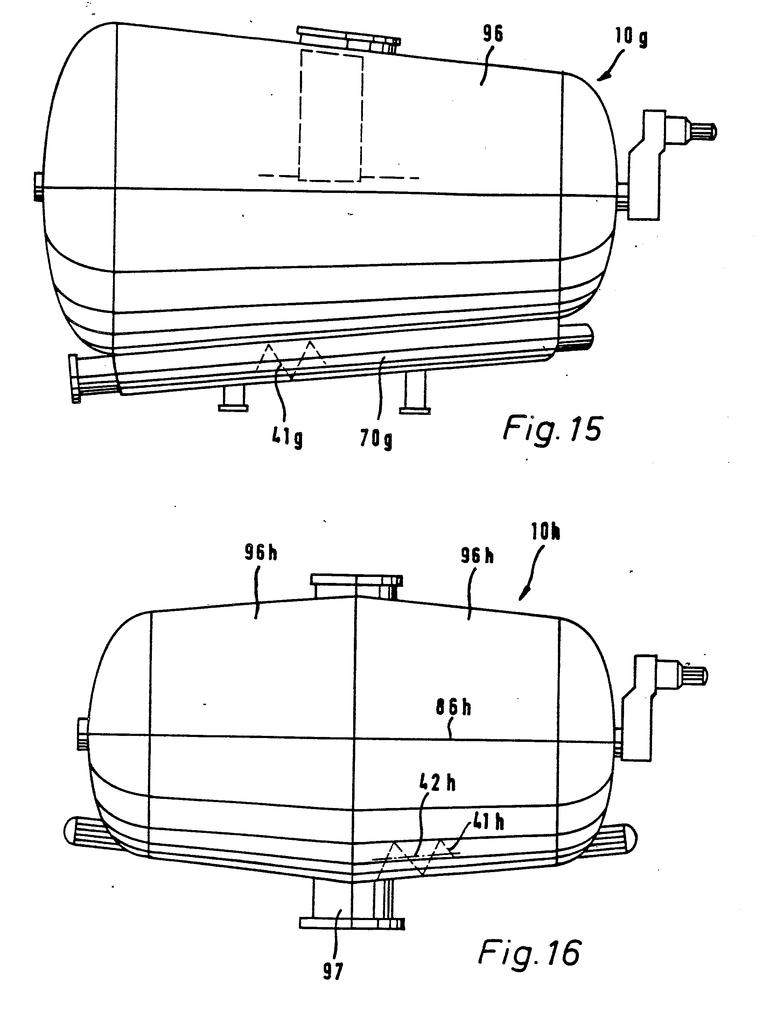

Fig. 15 zeigt mit dem Bezugszeichenzusatz "g" einen Tank 10g, der nicht über einen liegend-zylindrischen sondern einen liegend-konischen Abschnitt 96 verfügt. Die übrigen Elemente, beispielsweise die Ausbuchtung 70g für die Förderschnecke 41g sind an die Konusform des Tanks 10g angepaßt.

Ergänzend hierzu zeigt Fig. 16 mit dem Bezugszeichenzusatz "h" einen Tank 10h in doppelkonischer Form, bei dem zwei konische Abschnitte 96h symmetrisch zu einer Längsmittelebene angeordnet sind, so daß sich in der Tankmitte ein höchster bzw. tiefster Punkt des Tanks bildet. Am tiefsten Punkt des Tanks kann in diesem Falle ein zentraler Entleerungsstutzen 97 vorgesehen sein, in den zwei schräg zueinander angestellte Förderschnecken 41h das Ausgangsmaterial beim Entleeren fördern. Die Förderschneckenwelle 42h ist in diesem Fall parallel zur Wand des konischen Abschnittes 96h, d.h. schräg zur Längsachse 86h des Tanks 10h angeordnet.

Es sei nachdrücklich hervorgehoben, daß sämtliche im Rahmen der vorliegenden Erfindung am Beispiel zylindrischer Tanks geschilderten Varianten selbstverständlich auch bei konischen oder doppelkonischen oder sonst wie zylinderähnlichen Tanks eingesetzt werden können, ohne daß dies den Rahmen der vorliegenden Erfindung sprengt.

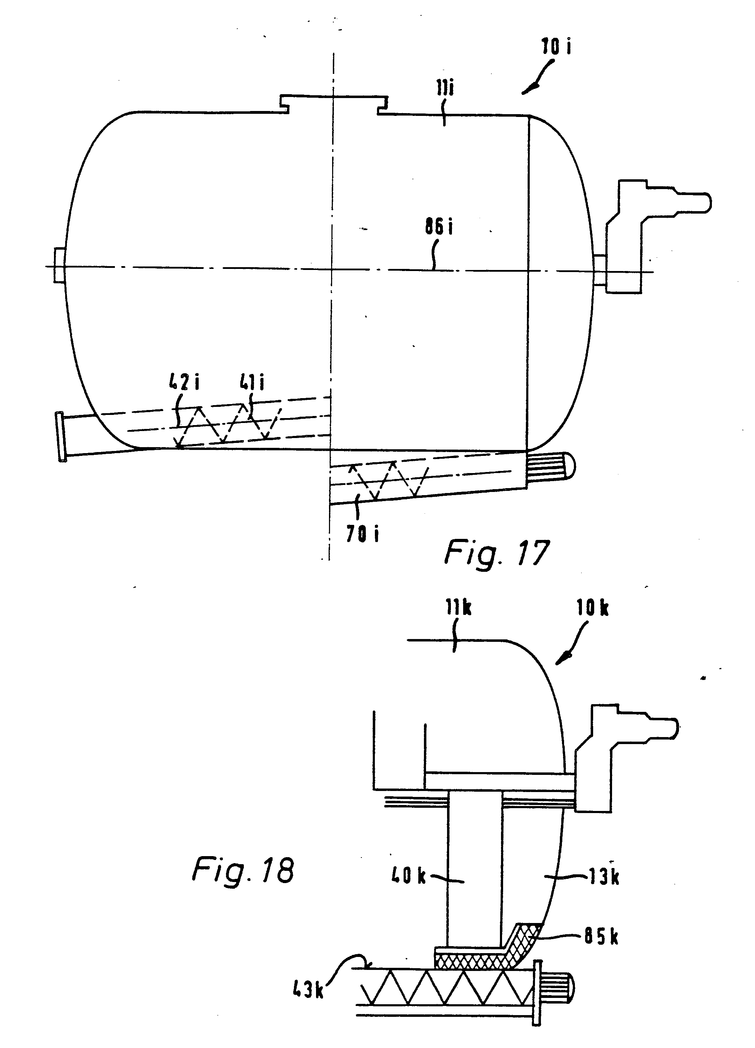

Fig. 17 zeigt mit dem Bezugszeichenzusatz "i" noch ein Ausführungsbeispiel mit einem liegend-zylindrischen Abschnitt 11i. In der linken Hälfte von Fig. 17 ist eine Variante dargestellt, bei der eine Förderschnecke 41i mit ihrer Welle 42i schräg zur Längsachse 86i des Tanks 10i angeordnet ist. Die Förderschnecke 41i befindet sich in diesem Falle im Inneren des liegend-zylindrischen Abschnittes 11i und die Bodenlinie der durch die nicht dargestellten Siebe gebildeten Rinne verläuft entsprechend schräg.

Die rechte Hälfte der Fig. 17 zeigt hierzu noch eine Variante, bei der wiederum an die Unterseite des liegend-zylindrischen Abschnittes 11i eine Ausbuchtung 70i angesetzt ist, die schräg bzw. konisch verläuft und zwar ebenfalls zur Längsachse 86i des Tanks 10i geneigt.

Fig. 18 zeigt mit dem Bezugszeichenzusatz "k" einen Tank 10k, bei dem die Rührwerksarme 40k ebenfalls mit Abstreifern an ihren freien Enden versehen sind, wobei diese Abstreifer parallel zur Längsachse des Tanks 10k oder dazu schräg gestellt angeordnet sein können. Der in Fig. 18 erkennbare Abstreifer 85k erstreckt sich vom zylindrischen Abschnitt 11k bis hinein in den stirnseitigen Boden 13k, so daß er sowohl den Boden 43k des Tanks 10k wie auch die Innenseite des stirnseitigen Bodens 13k überstreicht.

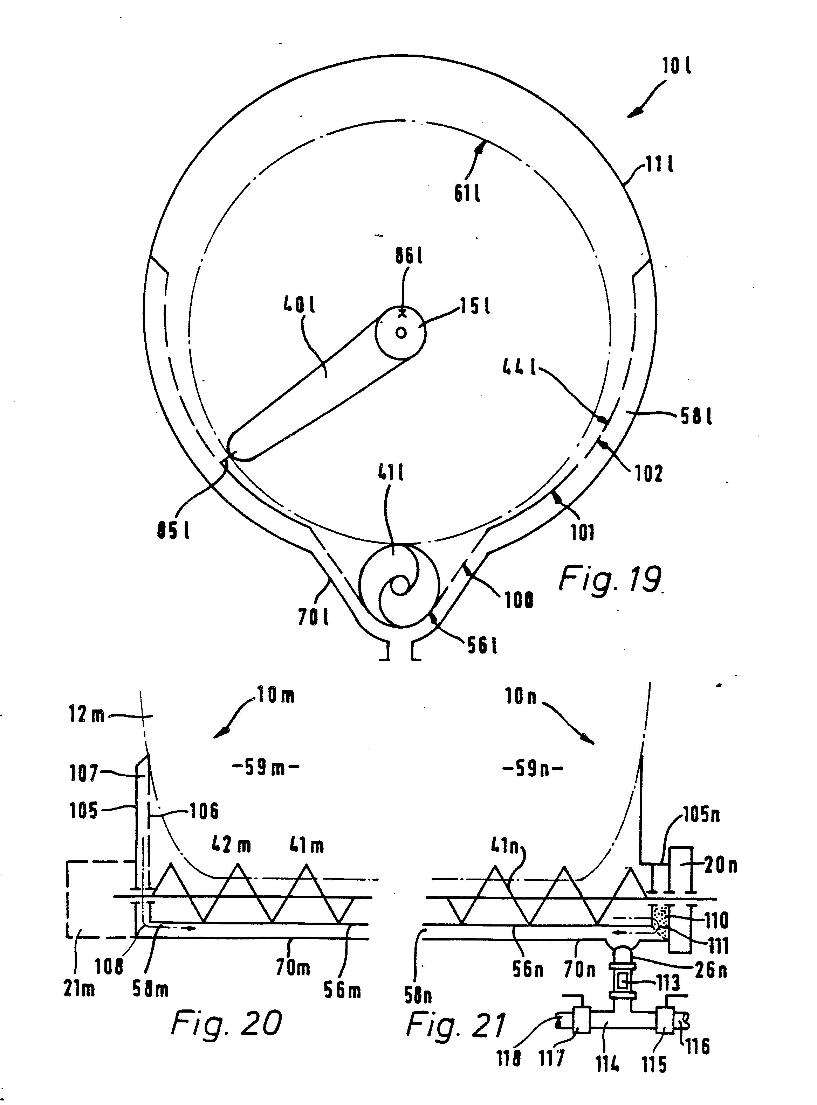

Fig. 19 zeigt mit dem Bezuszeichenzusatz "l" einen Tank 10l, bei dem die Rührwerkswelle 15l wiederum exzentrisch und zwar etwas unterhalb der Längsachse 86l des Tanks 10l angeordnet ist.

Am freien Ende der Rührwerksarme 40l sind wiederum radial abstehende elastische Abstreifer 85l vorgesehen.

Das Sieb 44l verläuft im unteren Bereich des Tanks 10l konzentrisch zum zylindrischen Abschnitt 11l. Im untersten Bereich des Tanks 10l ist eine Förderschneckenwanne in Gestalt einer Längsausbuchtung 70l vorgesehen, wobei sich die Förderschnecke 41l im Abstand oberhalb des Bodens der Längsausbuchtung 70l erstreckt. Das Sieb 44l ist wie folgt ausgebildet:

Unterhalb der Förderschnecke 41l ist im unteren Bereich 56l das Sieb 44l ungelocht ausgebildet und zwar soweit, wie es die Förderschnecke 41l eng umschlingt. In sich daran seitlich anschließenden ersten Bereichen 100 ist das Sieb 44l wiederum gelocht ausgebildet und zwar nach oben hin bis zu dem Punkt, an dem der erste Bereich 100 in die zum zylindrischen Abschnitt 11l konzentrische Konfiguration übergeht. Von dort an ist das Sieb 44l nach oben hin in einem zweiten Bereich 101 wieder ungelocht ausgebildet und geht schließlich in einen dritten Bereich 102 über, der wiederum gelocht ausgebildet ist.

Die Länge des zweiten Bereichs 101 ist so gewählt, daß die Abstreifer 85l bei Rotation der Rührwerksarme 40l in dem Punkt auf das Sieb 44l auftreffen, in dem der zweite Bereich 101 in den dritten Bereich 102 übergeht. Da der Umfangskreis 61l des Rührwerks exzentrisch zum zylindrischen Abschnitt 11l liegt, bedeutet dies, daß die elastischen Abstreifer 85l den zweiten Bereich 101 nach unten hin unter immer größerem Anpreßdruck überstreichen, während der davon abknickende oder abbiegende erste Bereich 100 weder von den Abstreifern 85l noch von der Förderschnecke 51l beeinflußt ist.

Aufgrund dieser Konfiguration kann die ausgeschmolzene Gelatine in den gelochten Bereichen 100 und 102 in den Hohlraum 58l durchtreten, während in den ungelochten Bereichen 56l und 101 eine Passierwirkung vermieden wird. Außerdem ist gewährleistet, daß beim Entleeren des Tanks 10l in den verhältnismäßig flach verlaufenden zweiten Bereich 101 sich keine Materialreste ablagern können, weil dort durch Rotation des Rührwerks diese Materialreste abgestreift und in den Wirkungsbereich der Förderschnecke 41l transportiert werden.

Fig. 20 zeigt mit dem Bezugszeichenzusatz "m" einen Tank 10m, dessen stirnseitiger Boden 12m nach unten hin in eine Kammer 105 übergeht, die mittels eines Siebblechs 106 vom Innenraum 59m getrennt ist. Außen auf die Kammer 105 ist der Antriebsmotor 21m der Förderschnecke 41m aufgesetzt und die Förderschneckenwelle 42m durchsetzt die Kammer 105 sowie das Siebblech 106. Ein Raum 107 zwischen Kammer 105 und Siebblech 106 steht mit dem Hohlraum 58m oberhalb der Längsausbuchtung 70m in Verbindung, in der sich die Förderschnecke 41m befindet. Da die Förderschnecke 41m, wie bereits mehrfach erläutert, an ihrer Unterseite von ungelochtem Blech umgeben ist, wird auf diese Weise erreicht, daß die ausgeschmolzene Gelatine an der Stirnseite des Bodens 12m durch das Siebblech 106 in den Raum 107 hindurchtreten und von dort in den Hohlraum 58m gelangen kann.

Fig. 21 zeigt mit dem Bezugszeichenzusatz "n" schließlich noch eine Variante, bei der die gegenüberliegende Stirnseite eines Tanks 10n, an der eine Längsausbuchtung 70n mit Förderschnecke 41n in einen Schneckenstutzen 20n übergeht, wiederum eine Kammer 105n angebracht ist. Die Kammer 105n befindet sich in axialer Verlängerung der Förderschnecke 41n. Das die Förderschnecke 41n umgebende und zumindest im unteren Bereich 56n ungelochte Blech geht zum größeren Außendurchmesser der Längsausbuchtung 70n z.B. über konisch angeordnete Siebbleche 110 über. Demzufolge kann die im Innenraum 59n ausgeschmolzene Gelatine nach unten in den Bereich der Förderschnecke 41n absinken, dort bis hin zum Schneckenstutzen 20n gelangen, radial nach außen durch die konischen Siebbleche 110 hindurchtreten und entlang des eingezeichneten Pfeiles 111 in den Hohlraum 58n gelangen.

Unten an den Hohlraum 58n ist der dritte Stutzen 26n als Produktablauf angeschlossen. Der dritte Stutzen 26n ist mit einem Schauglas 113 versehen, das seinerseits an ein T-Stück 114 angeschlossen ist. Zur einen Seite des T-Stücks 114 schließt sich ein erstes Ventil 115 an, mit dem eine Produktleitung 116 verschließbar ist, während an die andere Seite des T-Stücks 114 ein zweites Ventil 117 zum Verschließen einer Fettleitung 118 angeschlossen ist.

Beim Ablassen des ausgeschmolzenen Produktes strömt zunächst die schwerere ausgeschmolzene Gelatine durch den dritten Stutzen 26n und man kann im Schauglas 113 deutlich die glasklare Flüssigkeit erkennen. Sobald die ausgeschmolzene Gelatine abgeströmt ist und das oben aufschwimmende ausgeschmolzene Fett in den dritten Stutzen 26n gelangt, ist dies am Schauglas 113 durch eine Änderung der Farbe und Klarheit sofort erkennbar. Das erste Ventil 115 wird nun geschlossen und das zweite, zuvor geschlossene Ventil 117 wird geöffnet, so daß die ausgeschmolzene Gelatine einerseits und das Fett andererseits getrennten Behältern zugeführt werden.

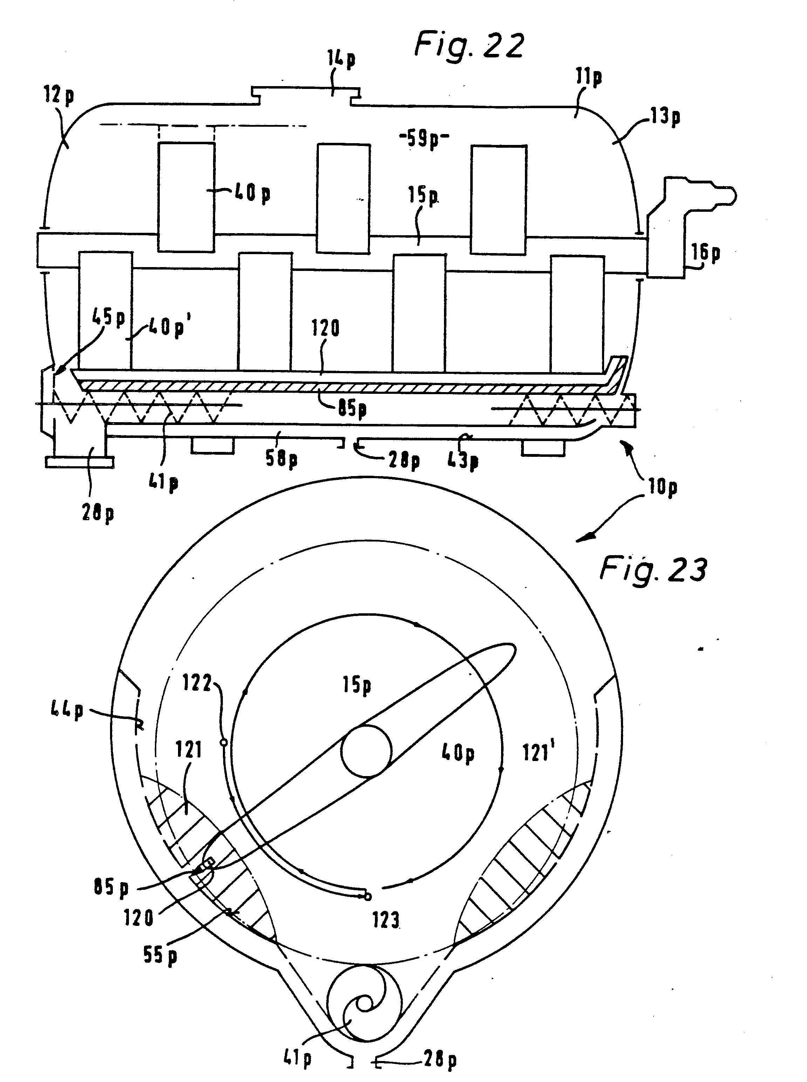

In Fig. 22 bezeichnet mit dem Bezugszeichen "p" 10p insgesamt den Tank zum Herstellen von Gelatine. Aus Fig. 22 erkennt man deutlich, daß an einer Rührwerkswelle 15p im zylindrischen Teil 11p des Tanks 10p zwei Gruppen von Rührwerksarmen angeordnet sind, die um 180° zueinander versetzt sind. Eine Gruppe Arme 40p steht in der Ansicht der Fig. 22 nach oben, während die andere Gruppe Arme 40p' nach unten weist. Es sind drei Arme 40p und vier Arme 40p' vorgesehen, die jeweils auf Lücke stehen. Die freien Enden der vier unteren Arme 40p' sind mittels eines Balkens 120 miteinander verbunden. Der Balken 120 trägt wiederum einen durchgehenden Abstreifer 85p, der an den beiden Enden an die Kontur der seitlichen Böden 12p und 13p des Tanks angepaßt sein kann.

Die Arme 40p sind, wie mit einer strichpunktierten Linie angedeutet, radial deutlich kürzer als die Arme 40p' ausgebildet. Mittels einer geeigneten Steuerung für Drehrichtung und Drehwinkel des Rührwerks läßt sich nun folgendes erreichen.

Um Reste 121 bzw. 121' des ausgelaugten Ausgangsmaterials, das sich auf den flachen Bereichen des Siebes 44p abgesetzt hat, in den Bereich der Förderschnecke 41p zu fördern, werden zunächst die Arme 40p und 40p' in eine horizontale Lage 122 gebracht. Diese Lage braucht nicht exakt horizontal zu sein, solange die Arme 40p und 40p' außer Reichweite der Reste 121 bzw. 121' bleiben. In einer ersten Phase werden nun die mit dem Abstreifer 85p am Balken 120 versehenen Arme 40p' um etwa 90° nach unten in eine vertikale Lage 123 bewegt. Die vier Arme 40p' nehmen auf diesem Weg den gesamten Rest 121 der linken Seite des Siebes 44p mit, weil der Balken 120 mit Abstreifern 85p durchgehend ausgebildet ist. Aus der vertikalen Lage 123 wird das Rührwerk nun um 360° in Gegenrichtung gedreht.

An dem Überschreiten der Ausgangsstellung 122 gelangen zwar nun die Arme 40p in den Bereich der Reste 121' der rechten Seite des Siebes 44p, dies ist jedoch wegen der kürzeren radialen Länge der Arme 40p ohne Bedeutung, weil selbst bei relativ viel Rest 121' nur im Bereich dessen Oberfläche etwas Material mitgenommen würde, das jedoch in der Vertikalstellung der Arme 40p in den Bereich der Schnecke 41p fallen würde.

Nach etwa 290° Drehwinkel aus der vertikalen Lage 123 heraus ergreifen die Arme 40p' nun jedoch mit ihrem durchgehenden Abstreifer 85p die Reste 121' der rechten Seite und schieben diese vollkommen in den Bereich der Schnecke 41p.

Es ist ferner in Fig. 22 erkennbar, daß am linken Rand der Schnecke 41p ein nach unten abgehender Schneckenstutzen vorgesehen ist. Der Schneckenstutzen durchsetzt den Hohlraum 58p, so daß ausgeschmolzene Gelatine durch ein Stirnseitensiebblech 45p um den Schneckenstutzen 20p herum in den Hohlraum 58p und von dort in einen Produktablauf 28p strömen kann.

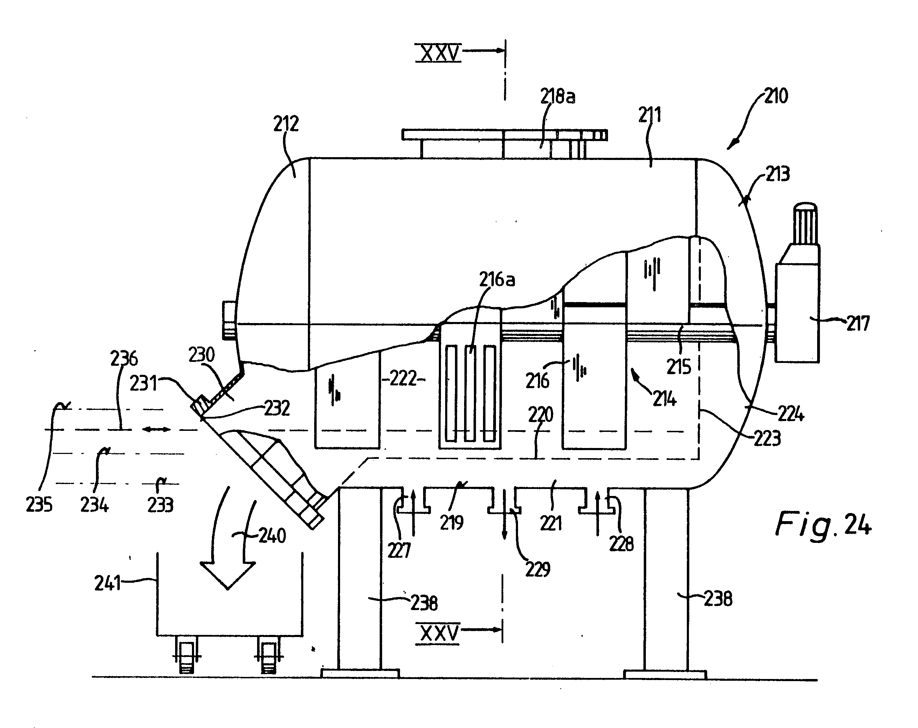

In Fig. 24 bezeichnet 210 insgesamt ein weiteres Ausführungsbeispiel eines erfindungsgemäßen Tanks, der Tank 210 weist einen zylindrischen Abschnitt 211 sowie seitlich angesetzte Klöpperböden 212, 213 auf. Ein horizontalachsiges Rührwerk 214 ist zentrisch oder leicht außermittig im Tank 210 angeordnet. Es weist eine Rührwerkswelle 215 mit radial davon abstehenden plattenartigen Rührwerksarmen 216 auf. Ein Antriebsmotor 217 ist seitlich an die Rührwerkswelle 215 angeschlossen, um das Rührwerk 214 mit geeigneter Drehzahl zu drehen.

An der Oberseite des Tanks 210 ist ein Einfülldom 218 zu erkennen, in den die Ausgangsprodukte eingefüllt werden können.

Im Abstand vom unteren Tankboden 219 befindet sich ein Sieb 220, das demzufolge einen Hohlraum 221 unterhalb des Siebes 220 von einem oberhalb des Siebes 220 liegenden übrigen Innenraum 222 des Tanks trennt. Das Sieb 220 geht im Bereich des in Fig. 24 rechten Klöpperbodens 213 in ein Stirnseitensieb 223 über, das den Innenquerschnitt des Tanks 210 vollkommen auskleidet. Rechts vom Stirnseitensieb 223 in Fig. 24 bildet sich demzufolge ein Raum 224, der in Verbindung mit dem Hohlraum 221 steht.

Im Tankboden 219 sind nebeneinander ein Kaltwassereinlauf 227, ein Heißwassereinlaut 228 sowie ein Produktablauf 229 vorgesehen, wobei der Eintritt bzw. Austritt der entsprechenden Flüssigkeiten durch die Einläufe 227, 228 bzw. den Ablauf 229 mit Pfeilen angedeutet ist.

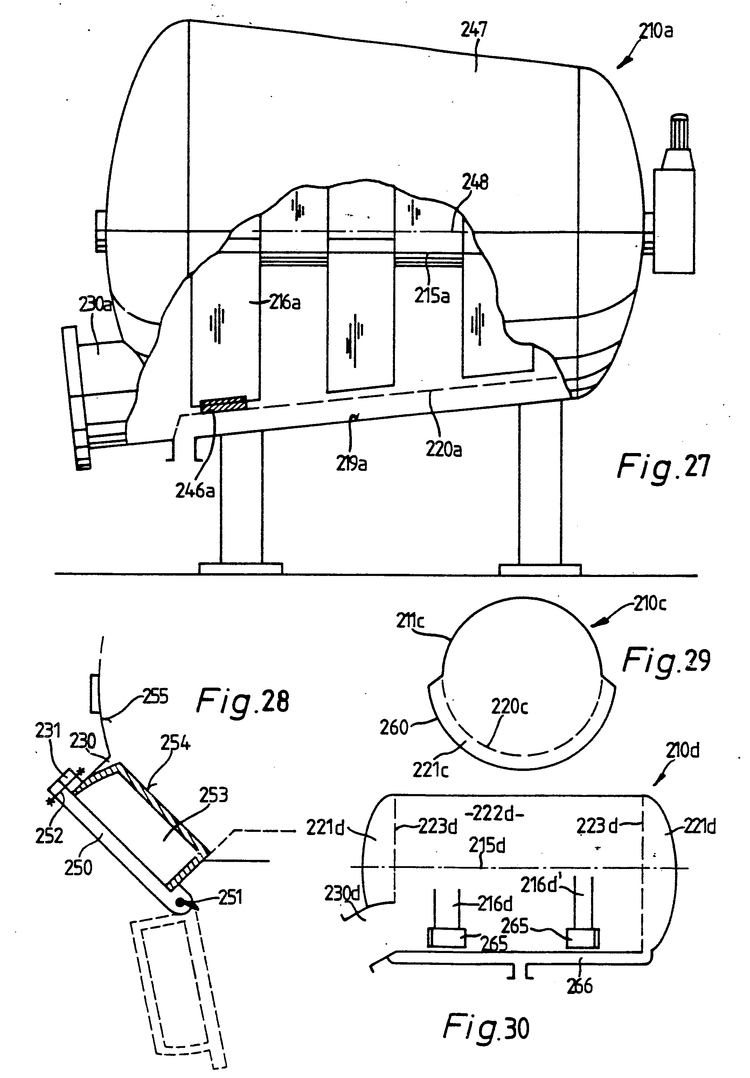

Im Bereich des linken Klöpperbodens 212 befindet sich an dessen Unterseite ein Ausräumstutzen 230, der nach vorne und unten geneigt ist. Der Ausräumstutzen 230 weist einen verhältnismäßig großen Durchmesser auf und verfügt im Bereich seiner Öffnung über einen Flansch 231 zum Befestigen eines Verschlusses, wie dies zu Fig. 28 weiter unten noch erläutert werden wird.

Von links in Fig. 24 gesehen weist der Ausräumstutzen 230 bzw. dessen Flansch 231 eine Oberkante 232 auf.

Die Anordnung des Ausräumstutzens 230 in Fig. 24 ist folgendermaßen getroffen:

Der Tankboden 219 befinde sich auf einer ersten Höhe 233, während das Sieb 220 eine zweite Höhe 234 definiere. Die genannte Oberkante 232 schließlich befinde sich auf einer dritten Höhe 235. Wenn nun die dritte Höhe 235 in genügend großem Abstand oberhalb der zweiten Höhe 234 liegt, ist es möglich, entlang der in Fig. 24 eingezeichneten Richtung 236 zwischen den Höhen 234 und 235 ein längliches Ausräumgerät horizontal in den Tank einzuführen und zwar bis hin zum Stirnseitensieb 223.

Auch beim Ausführungsbeispiel des Tanks 210 gilt, daß diese typischerweise eine Gesamtlänge von 1 bis 5 m und einen Durchmeser von 1/2 bis 3 m aufweist. Tanks dieser Art sind also ebenfalls für einen Volumenbereich zwischen ca. 1 m³ und 60 m³ konzipiert, können jedoch in ihren Abmessungen bzw. Volumina auch über diesen Bereich hinausgehen. Zum Antrieb des Rührwerks dient entweder ein Getriebemotor mit fest eingestellter Untersetzung, so daß sich eine Drehzahl im Bereich von etwa 0,2 bis 20 U/min einstellt, jedoch sind auch hier Abweichungen möglich, und statt eines Getriebes mit fest eingestellter Ausgangsdrehzahl kann ein stufenlos regelbares Getriebe oder ein stufenlos in einer Drehzahl einstellbarer Antriebsmotor verwendet werden.

Die Wirkungsweise des Tanks 210 ist wie folgt:

Bei verschlossenem Ausräumstutzen 230 und verschlossenem Produktablauf 229 wird zunächst durch den Einfülldom 218 das Ausgangsmaterial in den Tank 210 eingefüllt. Durch den Kaltwassereinlauf 227 wird nun durch das Sieb 220 hindurch Kaltwasser in den Innenraum 222 eingelassen und das Rührwerk 214 gedreht, um das Ausgangsmaterial zu säubern. In entsprechender Weise können sich weitere Wasch- oder Behandlungsbäder anschließen. Das kalte Wasser kann jeweils wieder durch in der Fig. 24 nicht näher dargestellten Abläufe abgelassen werden.

Anschließend wird die Gelatine mittels Heißwasser ausgeschmolzen, wie dies bereits weiter oben zu anderen Ausführungsbeispielen der Erfindung im einzelnen dargelegt wurde.

Nach Abschluß der Ausschmelzvorgänge kann nun der in Fig. 24 nicht dargestellte Verschlußdeckel des Ausräumstutzens 230 geöffnet werden, damit die Ausgangsmaterialreste, die eine sehr rutschige Konsistenz haben, sich möglichst vollkommen von selbst durch den Ausräumstutzen 230 entleeren. Hierzu ordnet man den Tank 210 zweckmäßigerweise auf Stützen 238 an, so daß sich die Reste unter Schwerkrafteinfluß so weit wie möglich von selbst in Richtung des Pfeiles 240 z.B. in einen bereitgestellten Wagen 241 entleeren können.

Aufgrund der vorstehend beschriebenen Konfiguration des Ausräumstutzen 230 relativ zum Sieb 220 kann nun jedoch das im flachen Bereich des Siebes 220 liegen gebliebene Restmaterial entlang der Richtung 236 mittels eines geeigneten Ausräumwerkzeuges nach vorne in den Wagen 241 gefördert werden.

Hierzu kann man beispielsweise eine lange Stange mit einem quer an deren freiem Ende befestigten Ausräumblech verwenden. Das Ausräumblech ist an seiner Unterseite vorzugsweise entsprechend der Umfangskontur des Siebes 220 ausgebildet und kann dort auch einen Gummiabstreifer tragen, damit das Sieb 220 möglichst vollkommen von Materialresten befreit werden kann.

Es versteht sich, daß das Rührwerk 214 während des Ausräumvorganges zweckmäßigerweise zunächst in eine vertikale Stellung gedreht wird, damit sich keine Materialreste auf den plattenartigen Rührflügeln 216 ablagern können, während es alsdann in eine horizontale Stellung gebracht wird, um das manuelle Ausräumen der noch verbliebenen Reste nicht zu behindern.

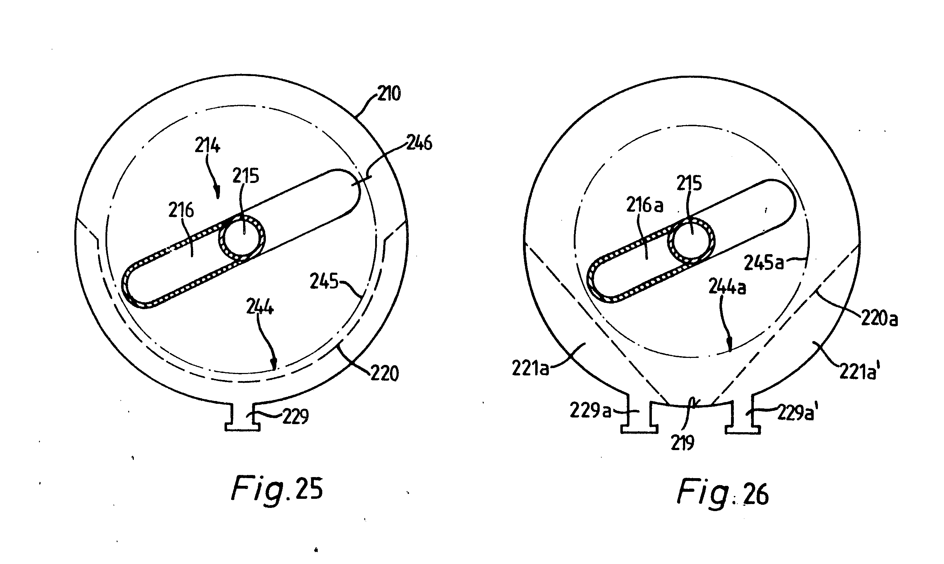

In Fig. 25 ist der Tank 210 gemäß Fig. 24 nochmals im Querschnitt dargestellt und man erkennt, daß das Sieb 220 die untere Hälfte des Tanks 210 in konstantem Abstand von der Tankwandung auskleidet, so daß das Rührwerk 214 einen größtmöglichen Rührwerksradius 244 bzw. Umfangskreis 245 aufweisen kann. Selbstverständlich können die freien Enden der Rührflügel 216 mit Abstreifern 246 versehen werden, um auch auf diese Weise die Entleerung des Tanks 210 zu fördern.

Man erkennt ferner aus Fig. 25, daß sowohl die Rührwerkswelle 215 wie auch die Rührflügel 216 zweckmäßigerweise hohl ausgebildet werden. Dies geschieht zum einen aus Gründen der Gewichtsersparnis, zum anderen aber auch, um dort Wärmetauschelemente unterbringen zu können. Diese können im übrigen auch an der Außenseite des Tanks angeordnet werden, um eine Feinregelung der Prozeßtemperatur vorzunehmen.

Fig. 26 zeigt eine Variante zur Darstellung der Fig. 25 und zwar derart, daß das Sieb 220a eine V-förmige Rinne bildet. Hierzu sind statt des in Fig. 25 vorgesehenen halbzylindrischen Sieblechs zwei ebene und schräg angeordnete Siebbleche vorgesehen, die im Abstand voneinander auf den Tankboden 219 aufgesetzt, z.B. aufgeschweißt sind. In diesem Falle sind daher zwei Produktabläufe 229a, 229a' vorzusehen, weil sich auch zwei Hohlräume 221a, 221a' bilden. Aufgrund der Anordnung der Fig. 26 sind der Umfangskreis 245a bzw. der Rührwerksradius 244 etwas kleiner als beim Ausführungsbeispiel der Fig. 25, jedoch erreicht man gemäß Fig. 26 eine einfachere und damit kostengünstigere Bauweise.

Fig. 27 zeigt eine Variante des Tanks der Fig. 24 und zwar insofern, als dort ein Tank 210a mit einem mittleren konischen Abschnitt 247 dargestellt ist. Der Ausräumstutzen 230a erstreckt sich in Verlängerung des Tanksbodens 219a schräg nach unten und vorne, er könnte jedoch auch horizontal ausgerichtet sein. Dies behindert zwar einerseits die Selbstentleerung, andererseits erleichtert es aber den manuellen Zugang.

Die Rührwerkswelle 215a ist beim Ausführungsbeispiel der Fig. 27 etwas unterhalb einer Längsachse 248 des Tanks 210a angeordnet, so daß Abstreifer 246a, die möglicherweise an den freien Enden der Rührwerksarme 216a angeordnet sind, das Sieb 220a über einen bestimmten Umfangswinkel bestreichen. Das Sieb 220a verläuft ebenfalls parallel zum Tankboden 219a und damit schräg nach unten und vorne. Es versteht sich, daß statt des konischen Tanks 210a in Fig. 27 auch ein doppelkonischer Tank, ein eliptischer Tank oder dgl. verwendet werden kann, ohne daß dies den Rahmen der vorliegenden Erfindung sprengt.

Fig. 28 zeigt noch ein Detail des Tanks der Fig. 24 und man erkennt, daß der Flansch 231 des Ausräumstutzens 230 mit einem Verschlußdeckel 250 versehen ist. Der Verschlußdeckel 250 ist einerseits über ein Gelenk 251 am Flansch 231 schwenkbar befestigt, während er am gegenüberliegenden Ende mittels Befestigungsmitteln 252, beispielsweise mittels Schrauben oder dgl. fest auf den Flansch 231 aufbringbar ist. An der Innenseite ist der Verschlußdeckel 250 mit einem Einsatz 253 versehen, dessen zum Inneren des Tanks weisende Außenkontur 254 an die benachbarte Innenkontur 255 des Tanks angeglichen ist. Auf diese Weise wird erreicht, daß sich im Bereich des Ausräumstutzens 230 keine toten Ecken bilden können, in denen sich noch unbearbeitetes Material ansammeln.

Außerdem kann die Außenkontur 254 so gewählt werden, daß im geöffneten Zustand des Verschlußdeckels 250 (kurz vor Erreichen der Fig. 28 gestrichelt eingezeichneten Stellung) die Außenkontur 254 eine Rutsche für die herausgleitenden Materialreste bildet.

Fig. 29 zeigt einen radialen Querschnitt durch einen Tank 210c, dessen Besonderheit darin besteht, daß das Sieb 220c im zylindrischen Abschnitt 211c des Tanks 210c selbst ausgebildet ist. Um einen Hohlraum 221c zu bilden, ist ein Außenblech 260 vorgesehen, das den gelochten Bereich des zylindrischen Abschnittes 211, d.h. das Sieb 220c im Abstand umgibt.

Schließlich zeigt Fig. 30 noch einen liegendzylindrischen Tank 210d, der lediglich mit zwei Stirnseitensieben 223d versehen ist, die stirnseitige Hohlräume 221d vom Innenraum 222d abtrennen. Der Ausräumstutzen 230d erstreckt sich in diesem Falle durch den linken Hohlraum 221d hindurch und mündet im linken Stirnseitensieb 223d.

Die nur schematisch angedeutete Rührwerkswelle 215d trägt wiederum Rührwerksarme 216d, 216d'. Beidseits einer radialen Längsmittelebene des Tanks 210d sind diese Rührwerksarme 216d, 216d' gegensinnig schräg zu einer Radialebene angestellt. Sie können auch statt dessen oder zusätzlich an ihren freien Enden mit schräg angestellten Blechen 265 bzw. 265' versehen sein, die vorzugsweise an ihren freien Kanten mit Abstreifern bestückt sind.

Durch die gegensinnige schräge Anstellung der Rührwerksarme 216d, 216d' bzw. Bleche 265 bzw. 265' wird in einer bestimmten Drehrichtung des Rührwerkes erreicht, daß die von den Rührwerksarmen 216d bzw. 216d' im wesentlichen mitgenommenen festen Bestandteile des Tankinhaltes in axialer Richtung zur Tankmitte befördert werden, wodurch sich die flüssigen Bestandteile, die von den Rührwerksarmen 216d bzw. 216d' weniger beeinflußt werden, nach außen zu den Stirnseitensieben 223 gelangen. Dort treten sie in die Hohlräume 221d hindurch. Bei intervallweiser Umschaltung der Drehrichtung kann dieser Prozeß auch periodisch umgekehrt werden, wodurch sich ebenfalls eine Steigerung der Rührwirkung ergibt.

Da beim Ausführungsbeispiel der Fig. 30 kein Sieb im unteren Bodenbereich des Tanks 210d vorgesehen ist, müssen entweder die Hohlräume 221d mit separaten Ablaßstutzen für das Produkt versehen werden, oder man sieht, wie in Fig. 30 angedeutet, einen über die Länge des Tanks 210d verlaufenden Verbindungskanals 266 für die beiden Hohlräume 221d vor, der nur mit einem einzigen Ablaßstutzen versehen zu werden braucht.

Es versteht sich, daß auch die vorstehend erläuterten Merkmale, soweit technisch möglich, sowohl bei liegend-zylindrischen wie auch bei liegend-konischen oder doppelkonischen Tanks, u.U. sogar bei stehenden Tanks, anwendbar sind, ohne daß dies den Rahmen der vorliegenden Erfindung verläßt.

Es versteht sich ferner, daß ohne den Rahmen der Erfindung zu verlassen, zusätzliche Weiterbildungen und Variationen der zuvor geschilderten Tanks möglich sind. Derartige Variationen können z.B. darin bestehen, daß Wärmetauschmittel zum gezielten Einstellen der Temperatur des Tankinneren vorgesehen sind, sei es im Rührwerk oder sei es in Form von Heizschlangen oder Heiztaschen am Außenumfang des Tanks.

**Ansprüche**

1. Tank zum Herstellen von Gelatine, dadurch gekennzeichnet, daß er ein Rührwerk (15, 40) enthält.

2. Tank zum Herstellen von Gelatine, der einen liegend-zylindrischen (11) oder -konischen (96) Abschnitt mit einem horizontalachsigen Rührwerk (15, 40) aufweist, wobei im Tank (10) mindestens ein Sieb (44) angeordnet ist, das einen Hohlraum (58) vom übrigen Innenraum (59) des Tanks (10) trennt, in dem das Rührwerk (15, 40) angeordnet ist, und wobei ferner mindestens ein von dem Hohlraum (58) zum Außenraum führender Stutzen (22, 24, 26, 28) vorgesehen ist, dadurch gekennzeichnet, daß im Tankboden (43) eine zur Achse des Tanks (10) parallele Förderschnecke (41) angeordnet ist, daß das Sieb (44) zum Tankboden (43) hin nach Art einer Rinne (55) ausgebildet ist, und daß die Förderschnecke (41) in der Rinne (55) angeordnet ist.

3. Tank nach einem oder beiden der Ansprüche 1 oder 2, dadurch gekennzeichnet, daß die die Förderschnecke (41) aufnehmende Rinne (55) des Siebes (44) bis etwa zur halben Höhe der Förderschnecke (41) ungelocht oder nur mit wenigen Abflußöffnungen (47) ausgebildet ist.

4. Tank zum Herstellen von Gelatine, der einen liegend-zylindrischen (211) oder -konischen (247) Abschnitt mit einem horizontalachsigen Rührwerk (214) aufweist, wobei im Tank (210) mindestens ein Sieb (220) angeordnet ist, das sich im Abstand (233/234) oberhalb eines Bodens (219) des Tanks (210) erstreckt und einen Hohlraum (221) vom übrigen Innenraum (222) des Tanks (210) trennt, in dem das Rührwerk (214) angeordnet ist, und wobei ferner mindestens ein von dem Hohlraum (221) zum Außenraum führender Stutzen (227 - 229) vorgesehen ist, dadurch gekennzeichnet, daß unten an einem stirnseitigen Boden (212) des Tanks (210) ein Ausräumstutzen (230) großen Durchmessers angeordnet ist, wobei die Oberkante (232) der Öffnung des Stutzens (230) im Abstand oberhalb des Siebes (220) angeordnet ist.

5. Tank nach einem oder mehreren der vorhergehenden Ansprüche, dadurch gekennzeichnet, daß im Abstand von stirnseitigen Böden (12, 13, 212, 213) den Querschnitt des Tanks (10, 210) mindestens teilweise überdeckende Stirnseitensiebe (80, 223) angeordnet sind.

6. Tank zum Herstellen von Gelatine, der einen liegend-zylindrischen oder -konischen Abschnitt mit einem horizontalachsigen Rührwerk aufweist, wobei im Tank (210d) mindestens ein Stirnseitensieb (223d) angeordnet ist, das sich im Abstand neben einem stirnseitigen Boden des Tanks (210d) erstreckt und einen Hohlraum (221d) vom übrigen Innenraum (222d) des Tanks (210d) trennt, in den das Rührwerk angeordnet ist, und wobei ferner mindestens ein von dem Hohlraum zum Außenraum führender Stutzen vorgesehen ist, dadurch gekennzeichnet, daß unten an einem stirnseitigen Boden des Tanks (210d) ein Ausräumstutzen (230d) großen Durchmessers angeordnet ist, wobei die Oberkante der Öffnung des Stutzens (230d) im Abstand oberhalb des unteren Tankbodens angeordnet ist.

7. Tank nach einem oder mehreren der vorhergehenden Ansprüche, dadurch gekennzeichnet, daß das Sieb (441) konzentrisch zum zylindrischen (111) oder konischen Abschnitt verläuft und im Bereich des Tankbodens im Abstand von einer Längsausbuchtung (701) verläuft, und im Bereich des Tankbodens im Abstand von einer Längsausbuchtung (701) verläuft, daß das Rührwerk (151) mit seiner Achse unterhalb einer Längsachse (861) des Tanks (101) angeordnet ist, daß an freien Enden von Rührwerksarmen (401) des Rührwerks elastische Abstreifer (851) angeordnet sind, daß das Sieb (441) im unteren Bereich der Rinne unterhalb der Förderschnecke (411) ungelocht, in einem daran angrenzenden ersten Bereich (100) bis zum Übergang zur konzentrischen Anordnung des Siebes (441) gelocht, in einem daran angrenzenden zweiten Bereich (101), in dem die Abstreifer (851) des Rührwerks (151) bei Rotation entlangstreifen, wiederum ungelocht und schließlich im daran angrenzenden dritten Bereich (102) wiederum gelocht ausgebildet ist.

8. Tank nach einem oder mehreren der vorhergehenden Ansprüche, dadurch gekennzeichnet, daß das Rührwerk vorzugsweise plattenartige Rührwerksarme (40, 216) aufweist.

9. Tank nach einem oder mehreren der vorhergehenden Ansprüche, dadurch gekennzeichnet, daß die freien Enden von mindestens näherungsweise miteinander fluchtenden Rührwerksarmen (41p') mittels eines durchgehenden Balkens (120) miteinander verbunden sind, der einen durchgehenden Abstreifer trägt.

10. Tank nach einem oder mehreren der vorhergehenden Ansprüche, dadurch gekennzeichnet, daß in dem Stutzen (26n) für den Ablauf der ausgeschmolzenen Gelatine ein Schauglas (113) angeordnet ist, das stromabwärts des Schauglases (113) ein T-Stück (114) angeschlossen ist, und daß von dem T-Stück (114) über Ventile (115, 117) verschließbare Leitungen (116, 118) für den Abzug von Gelatine bzw. Fett abgehen.

Fig.2

Fig.1

Fig. 4

Fig. 3

Fig. 5

Fig. 6

Fig. 7

EP 0 294 777 A2

Fig. 8    Fig. 9    Fig. 10    Fig. 11

Fig. 12

Fig. 13

Fig. 14

**Fig.15**

96  10 g

41g  70g

**Fig.16**

96h  96h  10h

86h

42h  41h

97

Fig. 17

Fig. 18

4401P101EP

Fig. 19

Fig. 20

Fig. 21

*Fig. 22*

*Fig. 23*

4401 P 101 EP

Fig. 24

Fig. 26

Fig. 25

*Fig.27*

*Fig.28*

*Fig.29*

*Fig.30*